(19) Europäisches Patentamt

European Patent Office

Office européen des brevets

(11) **EP 1 701 022 A2**

(12) **EUROPÄISCHE PATENTANMELDUNG**

| | |
|---|---|
| (43) Veröffentlichungstag:<br>**13.09.2006 Patentblatt 2006/37** | (51) Int Cl.:<br>***F02D 21/08*** *(2006.01)* ***F02D 41/18*** *(2006.01)* |

(21) Anmeldenummer: **06013404.6**

(22) Anmeldetag: **11.11.2002**

(84) Benannte Vertragsstaaten:
**CZ DE ES FR GB IT**
Benannte Erstreckungsstaaten:
**AL LT LV MK RO SI**

(30) Priorität: **28.11.2001 DE 10158262**
**28.11.2001 DE 10158247**
**28.11.2001 DE 10158261**
**28.11.2001 DE 10158250**
**28.11.2001 DE 10158249**

(62) Dokumentnummer(n) der früheren Anmeldung(en) nach Art. 76 EPÜ:
**02790353.3 / 1 507 967**

(71) Anmelder: **Volkswagen Aktiengesellschaft**
**38436 Wolfsburg (DE)**

(72) Erfinder:
• **Nitzke, Hans-Georg**
**38547 Wettmershagen (DE)**
• **Rebohl, Thorsten**
**38100 Braunschweig (DE)**
• **Jeschke, Jens**
**38106 Braunschweig (DE)**

(74) Vertreter: **Banzer, Hans-Jörg**
**Kraus & Weisert**
**Patent- und Rechtsanwälte**
**Thomas-Wimmer-Ring 15**
**80539 München (DE)**

Bemerkungen:
Diese Anmeldung ist am 28 - 06 - 2006 als Teilanmeldung zu der unter INID-Kode 62 erwähnten Anmeldung eingereicht worden.

(54) **Verfahren zur Bestimmung der Zusammensetzung des Gasgemisches in einem Brennraum eines Verbrennungsmotors mit Abgasrückführung**

(57) In einem Motormanagementsystem werden zur Bestimmung der Zusammensetzung sowie der Masse des von einem Verbrennungsmotor (1) angesaugten Frischluft/Abgasgemisches physikalisch basierte Modelle (16-21) angewendet, die jeweils in Bezug auf bestimmte Zustandsgrößen das Verhalten des Verbrennungsmotors (1) bzw. des entsprechenden Motorsystems nachbilden. Die einzelnen physikalisch basierten Modelle (16-21) sind teilweise eng miteinander gekoppelt und dienen beispielsweise zur Nachbildung der Befüllung des Brennraums des Verbrennungsmotors (1) mit dem angesaugten Frischluft/Abgasgemisch, zur Nachbildung des über die Abgasrückführung fließenden Abgasrückführmassenstroms, zur Nachbildung des Verhaltens des Abgastrakts des Verbrennungsmotors (1) vor und nach einer Turbine (2), zur Nachbildung des Speicherverhaltens des Ansaugtrakts des Verbrennungsmotors sowie zur Nachbildung des Verhaltens des Saugrohrs bzw. Einlasskrümmers, worüber das Frischluft/Abgasgemisch von einer entsprechenden Mischstelle (10), in der die angesaugte Frischluft mit dem über die Abgasrückführung zurückgeführten Abgas gemischt wird, dem Verbrennungsmotor (1) zugeführt wird. Auf diese Weise können eine Vielzahl von zusätzlichen Zustandsgrößen ohne zusätzliche Sensoren ermittelt werden.

FIG. 1

**EP 1 701 022 A2**

**Beschreibung**

Die vorliegende Erfindung betrifft ein Verfahren zur Bestimmung der Zusammensetzung des Gasgemisches in einem Brennraum eines Verbrennungsmotors mit Abgasrückführung sowie ein entsprechend ausgestaltetes Steuersystem für einen Verbrennungsmotor, beispielsweise einen Dieselmotor.

Für die emissionsoptimale Regelung eines aufgeladenen Dieselmotors mit Abgasrückführung ist die genaue Kenntnis der Masse und der Zusammensetzung des angesaugten Gasgemisches, d.h. des Frischluft/Abgasgemisches, im Motorbrennraum von entscheidender Bedeutung.

Bei bekannten Konzepten wird die Frischluftmasse im Brennraum des Verbrennungsmotors aus der Messung des Frischluftmassenstroms über einen Heißfilm-Luftmassensensor sehr weit vorne im Ansaugtrakt des Verbrennungsmotors bestimmt. Durch das Frischluftspeicherverhalten des Ansaugtrakts ist diese Bestimmung der Frischluftmasse in den dynamischen Motorbetriebsphasen fehlerbehaftet. Darüber hinaus kann zur Berechnung der in dem Brennraum befindlichen Abgasmasse, welche über die Abgasrückführung des Verbrennungsmotors zurückgeführt und an einer Abgasrückführung-Mischstelle mit der angesaugten Frischluft gemischt worden ist, nicht auf ein derartiges Sensorsignal zurückgegriffen werden. Bei herkömmlichen Konzepten kann somit diese Größe nicht bestimmt werden.

Der vorliegenden Erfindung liegt daher die Aufgabe zugrunde, ein Verfahren zur Bestimmung der Zusammensetzung des Gasgemisches in einem Brennraum eines Verbrennungsmotors mit Abgasrückführung sowie ein entsprechend ausgestaltetes Steuersystem für einen Verbrennungsmotor vorzuschlagen, womit mit möglichst einfachen Mitteln eine exakte Bestimmung der Zusammensetzung des Gasgemisches in dem Brennraum des Verbrennungsmotors, d.h. eine exakte Bestimmung der Frischluft- und Abgasmasse, vor allem in den dynamischen Motorbetriebsphasen möglich ist.

Diese Aufgabe wird erfindungsgemäß durch ein Verfahren mit den Merkmalen des Anspruches 1 bzw. ein Steuersystem mit den Merkmalen des Anspruches 64 gelöst. Die Unteransprüche definieren jeweils bevorzugte und vorteilhafte Ausführungsformen der vorliegenden.Erfindung.

Erfindungsgemäß ist vorgesehen, zur Bestimmung der Zusammensetzung des Gasgemisches in einem Brennraum eines Verbrennungsmotors, d.h. zur Bestimmung der Frischluft- und Abgasmasse in diesem Brennraum, entsprechende Zustandsgrößen des Verbrennungsmotors mittels Verwendung entsprechender physikalisch basierter Modelle zu bestimmen, wobei die einzelnen physikalisch basierten Modelle in Bezug auf die jeweils zu berechnende Zustandsgröße das Verhalten des Verbrennungsmotors bzw. des Motorsystems nachbilden. Als Zustandsgrößen können diesbezüglich beispielsweise unter anderem der Frischluftmassenstrom in den sogenannten Einlasskrümmer des Verbrennungsmotors unter Berücksichtigung des Speicherverhaltens des Ansaugtrakts, der Abgasrückführmassenstrom, der Druck und die Temperatur des Ansauggases vor den Einlassventilen des Verbrennungsmotors, der Druck und die Temperatur des Abgases vor der Turbine etc. berechnet werden. Die physikalisch basierten Modelle können teilweise auch durch empirische Modelle ersetzt werden, wenn sich für das jeweilige Modell kein echtzeitfähiges physikalisches Modell ermitteln lässt.

Mit Hilfe eines ersten Modells kann die Befüllung des Brennraums mit dem Frischluft-Abgasgemisch aus dem sogenannten Einlasskrümmer, d.h. der Verbindung zwischen der Abgasrückführung-Mischstelle und den Einlassventilen des jeweiligen Motors, nachgebildet werden, um sowohl den Frischluftmassenstrom und den Abgasmassenstrom als auch die Frischluftmasse im Brennraum und die Abgasmasse im Brennraum des Verbrennungsmotors bestimmen zu können.

Über die Abgasrückführleitung des Verbrennungsmotors wird Abgas aus dem Abgastrakt in den Ansaugtrakt zurückgeleitet. Diesbezüglich kann ein weiteres Modell eingesetzt werden, um den Abgasrückführmassenstrom durch die Abgasrückführleitung und die Temperatur des zurückgeführten Abgases vor der Abgasrückführung-Mischstelle ermitteln zu können. Hierzu kann ein Modellansatz für eine Drosselstelle zum Einsatz kommen.

Ein weiteres Modell kann zur Nachbildung des Verhaltens des Abgastrakts vor und nach der Turbine des Motorsystems eingesetzt werden. Als wichtigste Ausgangsgröße kann mit Hilfe dieses Modells - erneut unter Berechnung entsprechender Ausgangs- bzw. Zwischengrößen

-   der Abgasgegendruck vor der Turbine ermittelt werden.

Ebenso kann mit Hilfe eines entsprechenden Modells das Speicherverhalten des Ansaugtraktes zwischen dem Verdichter und der Abgasrückführung-Mischstelle nachgebildet werden. Diesbezüglich kann ein Modell verwendet werden, welches ein Speichervolumen für die Frischluft und eine anschließende Drosselstelle nachbildet. Als wesentliche Ausgangsgrößen dieses Modells können der Frischluftmassenstrom durch die zuvor genannte Drossel in den Einlasskrümmer, d.h. in den Motoreinlass, die gespeicherte Frischluftmasse in dem zuvor genannten Speichervolumen sowie der modellierte Ladedruck etc. bestimmt werden.

Im so genannten Saugrohr des Verbrennungsmotors vermischen sich der zufließende Abgasrückführmassenstrom, d.h. der zurückgeführte Abgasmassenstrom, zu dem Frischluft/Abgasgemisch, aus dem sich der Motor seine Füllung ansaugt. Auch das Verhalten dieses Saugrohrs kann mit Hilfe eines entsprechenden Modells nachgebildet werden, um beispielsweise die Abgasrückführmasse und die Frischluftmasse in dem Saugrohr zu berechnen, was beispielsweise durch Auswertung der Massenstrombilanzen für die Frischluft und die rückgeführte Abgasmasse erfolgen kann.

Ein weiteres Modell kann zur Bestimmung der Saugrohrtemperatur, d.h. der Temperatur des Frischluft/Abgasgemisches in dem Saugrohr, vorgesehen sein. Die Saugrohrtemperatur kann diesbezüglich insbesondere in Abhängigkeit von der Abgasrückführmasse in dem Saugrohr und der Temperatur des Abgasrückführmassenstroms sowie der Frischluftmasse im Saugrohr und der Temperatur des einströmenden Frischluftmassenstroms bestimmt werden. Die einzelnen zuvor bestimmten Modelle stehen teilweise in einem engen Zusammenhang, so dass vorzugsweise zur Berechnung von einer bestimmten Zustandsgröße in einem Modell auf die Ergebnisse eines anderen Modells zugegriffen wird. Dabei ist zu beachten, dass die im Rahmen dieser Patentanmeldung formelmäßig beschriebenen Abhängigkeiten der einzelnen Größen in der Regel lediglich die proportionalen Zusammenhänge verdeutlichen sollen, so dass abhängig von der jeweiligen Anwendung oder Implementierung gegebenenfalls (nicht angegebene) Normierungs- oder Korrekturfaktoren zur weiteren Umrechnung der entsprechenden Größen zu berücksichtigen sind.

Insgesamt kann mit Hilfe der vorliegenden Erfindung die Masse und Zusammensetzung des von dem Brennraum des Verbrennungsmotors, beispielsweise eines Dieselmotors, angesaugten Gasgemisches exakt bestimmt werden, so dass eine emissionsoptimale Regelung des Verbrennungsmotors aufgrund der genauen Kenntnis der Masse und der Zusammensetzung der Frischluftmasse und der Abgasmasse in dem Brennraum des Verbrennungsmotors möglich ist. Dabei kann ohne den Einsatz separater oder zusätzlicher Sensoren eine Vielzahl von Zustandsgrößen aus ohnehin bekannten Informationen gewonnen werden, so dass neue Steuer- und Regelstrategien ermöglicht werden.

Daneben betrifft die vorliegende Erfindung neben den zuvor erläuterten Erfindungsaspekten auch die folgenden Erfindungsaspekte, welche im Prinzip jeweils voneinander unabhängig sowie von den zuvor erläuterten Erfindungsaspekten unabhängig sind. Selbstverständlich ist jedoch auch die Kombination einzelner oder sämtlicher hierin beschriebener Erfindungsaspekte möglich.

## I. Verfahren zur Steuerung eines Verbrennungsmotors mit Abgasrückführung sowie entsprechend ausgestaltetes Steuersystems für einen Verbrennungsmotor

Über die Abgasrückführleitung eines Verbrennungsmotors wird Abgas aus dem Abgastrakt in den Ansaugtrakt zurückgeleitet. Für die emissionsoptimale Steuerung bzw. Regelung beispielsweise eines aufgeladenen Dieselmotors mit Abgasrückführung ist die genaue Kenntnis einer möglichst großen Anzahl von Zustandsgrößen oder Betriebsparametern von Bedeutung.

In herkömmlichen Motormanagementsystemen ist jedoch die Anzahl der erfassten bzw. bekannten Zustandsgrößen relativ gering, oder für die Erfassung der Zustandsgrößen sind jeweils separate Sensoren erforderlich. Dies betrifft insbesondere die mit dem Abgastrakt von Verbrennungsmotoren verbundenen Zustandsgrößen, wie beispielsweise den Abgasgegendruck oder die Abgastemperatur vor oder nach der Turbine des jeweiligen Verbrennungsmotors etc.. Diese Zustandsgrößen können bisher allenfalls mit separaten Sensoren erfasst werden.

Zur Realisierung eines Verfahren zur Steuerung eines Verbrennungsmotors mit Abgasrückführung sowie eines entsprechend ausgestalteten Steuersystems für einen Verbrennungsmotor, womit eine Steuerung des Verbrennungsmotors in Abhängigkeit von auf möglichst effektive Weise und ohne Erfordernis von zusätzlichen Sensoren bestimmten Zustandsgrößen des Abgastrakts möglich ist, kann ein physikalisch basiertes Modell angewendet werden, welches das Verhalten des Abgastrakts des Verbrennungsmotors vor und nach einer dem Verbrennungsmotor zugeordneten Turbine nachbildet. Mit Hilfe dieses Modells können verschiedene mit dem Abgastrakt verbundene Zustandsgrößen aus anderen (bereits bekannten oder ohnehin erfassten) Zustandsgrößen ermittelt werden, so dass davon abhängig bestimmte Betriebsparameter des Verbrennungsmotors, wie beispielsweise die Kraftstoff-Einspritzmenge oder der Kraftstoff-Einspritzzeitpunkt etc., emissionsoptimal gesteuert bzw. geregelt werden können.

Mit Hilfe des Modells kann beispielsweise der Abgasgegendruck vor oder nach der Turbine, die Abgastemperatur vor oder nach der Turbine oder auch der Abgasgegendruck des über die Abgasrückführleitung des Verbrennungsmotors zurückgeführten Abgases aus bereits bekannten Zustandsgrößen ohne Verwendung zusätzlicher Sensoren bestimmt werden.

Vorzugsweise kommen mehrere physikalisch basierte (oder auch empirisch ermittelte) Modelle zur Anwendung, welche teilweise in einem engen Zusammenhang stehen, so dass vorzugsweise zur Berechnung von einer bestimmten Zustandsgröße in einem Modell auf die Ergebnisse eines anderen Modells zugegriffen wird. Dabei ist zu beachten, dass die hierin formelmäßig beschriebenen Abhängigkeiten der einzelnen Größen in der Regel lediglich die proportionalen Zusammenhänge verdeutlichen sollen, so dass abhängig von der jeweiligen Anwendung oder Implementierung gegebenenfalls (nicht angegebene) Normierungs- oder Korrekturfaktoren zur weiteren Umrechnung der entsprechenden Größen zu berücksichtigen sind.

Insgesamt können somit Zustandsgrößen des Abgastrakts eines Verbrennungsmotors, beispielsweise eines Dieselmotors, exakt und mit einfachen Mitteln durch Auswertung bereits bekannter Zustandsgrößen ermittelt werden. Die Verwendung zusätzlicher Sensoren ist hierfür nicht erforderlich. Durch die somit einfach mögliche Bestimmung der Zustandsgrößen des Abgastrakts sind neue Regel- und Diagnoseverfahren innerhalb des jeweiligen Motormanagementsystems möglich, was beispielsweise eine emissionsoptimale Regelung des Verbrennungsmotors erlaubt.

Dieser Erfindungsaspekt umfasst somit insbesondere die folgenden Merkmale:

1 . Ein Verfahren zur Steuerung eines Verbrennungsmotors mit Abgasrückführung, wobei Frischluft mit einem über die Abgasrückführung zurückgeführten Abgas des Verbrennungsmotors an einer Mischstelle gemischt und das daraus resultierende Gasgemisch dem Brennraum des Verbrennungsmotors zugeführt wird, wobei durch ein physikalisch basiertes Modell das Verhalten eines Abgastrakts des Verbrennungsmotors vor und nach einer dem Verbrennungsmotor zugeordneten Turbine nachgebildet und mit Hilfe des Modells mindestens eine mit dem Abgastrakt verbundene Zustandsgröße aus mindestens einer weiteren Zustandsgröße bestimmt wird, um davon abhängig den Verbrennungsmotor zu steuern.

2. Ein Verfahren gemäß 1, wobei mit Hilfe des Modells ein Abgasgegendruck vor der Turbine bestimmt wird, wobei hierzu der Schaufelweg der Turbine gemessen oder aus einem Ansteuer-Tastverhältnis eines zur Verstellung der Schaufeln der Turbine vorgesehenen Stellglieds abgeleitet wird.

3. Ein Verfahren gemäß 1 oder 2, wobei mit Hilfe des Modells eine Abgastemperatur vor der Turbine in Abhängigkeit von einer in dem Brennraum des Verbrennungsmotors eingespritzten Kraftstoffmasse und einer Drehzahl des Verbrennungsmotors bestimmt wird.

4. Ein Verfahren gemäß 3, wobei zur Bestimmung der Abgastemperatur vor der Turbine eine auf die Temperatur des Gasgemisches zwischen der Mischstelle und dem Verbrennungsmotor bezogene Temperaturveränderung in Abhängigkeit von der eingespritzten Kraftstoffmasse und der Drehzahl des Verbrennungsmotors bestimmt wird.

5. Ein Verfahren gemäß 4, wobei die Temperaturänderung in Abhängigkeit von einem Förderbeginn des in dem Brennraum des Verbrennungsmotors einzuspritzenden Kraftstoffs korrigiert wird.

6. Ein Verfahren gemäß einem der Punkte 1-5, wobei ein von dem Verbrennungsmotor ausgestoßener Abgasmassenstrom mit Hilfe des Modells aus einem dem Brennraum des Verbrennungsmotors zugeführten Gesamtmassenstrom des Gasgemisches und einer in den Brennraum des Verbrennungsmotors eingespritzten Kraftstoffmasse abgeleitet wird.

7. Ein Verfahren gemäß 6, wobei mit Hilfe des Modells aus dem von dem Verbrennungsmotor ausgestoßenen Abgasmassenstrom und einem über die Abgasrückführung fließenden Abgasrückführmassenstrom ein durch die Turbine fließender Abgasmassenstrom bestimmt wird.

8. Ein Verfahren gemäß einem der Punkte 1-7, wobei mit Hilfe des Modells eine Drehzahl einer mit der Turbine und einem dem Verbrennungsmotor zugeordneten Verdichter gekoppelten Abgasturboladerwelle in Abhängigkeit von einem durch den Verdichter fließenden Frischluftmassenstrom und einem Druckverhältnis über dem Verdichter bestimmt wird.

9. Ein Verfahren gemäß 8, wobei zur Bestimmung des Druckverhältnisses über dem Verdichter ein Druck vor dem Verdichter aus dem Atmosphärendruck, einem gemessenen Frischluftmassenstrom und der Atmosphärentemperatur sowie ein Druck nach dem Verdichter aus einem Ladedruck, mit welchem die Frischluft von dem Verdichter der Mischstelle zugeführt wird, dem gemessenen Frischluftmassenstrom und einer Ladetemperatur, mit welcher die Frischluft von dem Verdichter der Mischstelle zugeführt wird, bestimmt wird.

10. Ein Verfahren gemäß 9, wobei der durch den Verdichter fließende Frischluftmassenstrom aus dem gemessenen Frischluftmassenstrom und dem Druck vor dem Verdichter mit Hilfe einer auf die Atmosphärentemperatur und einer Bezugstemperatur des Verdichters bezogenen Normierung bestimmt wird.

11. Ein Verfahren gemäß einem der Punkte 1-10, wobei mit Hilfe des Modells eine Abgastemperatur nach der Turbine in Abhängigkeit von einer Abgastemperatur vor der Turbine, einer Temperaturänderung über der Turbine und einem Turbinenwirkungsgrad bestimmt wird.

12. Ein Verfahren gemäß 11, wobei die Temperaturänderung über der Turbine in Abhängigkeit von einem Druckverhältnis über der Turbine bestimmt wird.

13. Ein Verfahren gemäß 11 oder 12, wobei der Wirkungsgrad der Turbine in Abhängigkeit von einem Schaufelweg der Turbine bestimmt wird.

14. Ein Verfahren gemäß einem der Punkte 11-13, wobei die Abgastemperatur $T_{nT}$ nach der Turbine in Abhängigkeit von der Abgastemperatur $T_{vT}$ vor der Turbine, der Temperaturänderung $\Delta T_T$ über der Turbine und dem Wirkungsgrad $\eta_T$ der Turbine wie folgt bestimmt wird: $T_{nT} = T_{vT} \cdot (1 - \Delta T_T \cdot \eta_T)$.

15. Ein Verfahren gemäß einem der Punkte 1-14, wobei ein Abgasgegendruck hinter der Turbine mit Hilfe des Modells aus einem Druckdifferenzwert, welcher die Differenz zwischen dem Abgasgegendruck hinter der Turbine und dem Atmosphärendruck bezeichnet, abgeleitet wird.

16. Ein Verfahren gemäß 15, wobei der Druckdifferenzwert in Abhängigkeit von einem Abgasmassenstrom durch die Turbine bestimmt wird.

17. Ein Verfahren gemäß 16, wobei der Druckdifferenzwert in Abhängigkeit von dem Abgasmassenstrom durch die Turbine bestimmt wird, nachdem der Abgasmassenstrom durch die Turbine multiplikativ mit Hilfe eines Faktors, welcher der Wurzel aus einer Abgastemperatur nach der Turbine entspricht, korrigiert worden ist.

18. Ein Verfahren gemäß einem der Punkte 15-17, wobei der Abgasgegendruck hinter der Turbine durch Addition des Druckdifferenzwerts mit dem Atmosphärendruck bestimmt wird.

19. Ein Verfahren gemäß 18, wobei mit Hilfe eines Abgasgegendrucksensors eine Druckdifferenz im Abgastrakt hinter der Turbine gemessen wird, wobei der Abgasgegendruck hinter der Turbine durch Addition der von dem Abgasgegendrucksensor gemessenen Druckdifferenz mit dem erstgenannten Druckdifferenzwert und dem Atmosphärendruck bestimmt wird.

20. Ein Verfahren gemäß einem der Punkte 1-19, wobei der Abgasgegendruck vor der Turbine aus einem Abgasgegendruck nach der Turbine, einem durch die Turbine fließenden Abgasmassenstrom, einem Schaufelweg der Turbine und einer Drehzahl einer mit der Turbine gekoppelten Abgasturboladerwelle bestimmt wird.

21. Ein Verfahren gemäß 20, wobei der Abgasgegendruck vor der Turbine aus dem Abgasgegendruck $p_{nT}$ nach der Turbine, dem Abgasmassenstrom $dm_T$ durch die Turbine, dem Schaufelweg s der Turbine und der Drehzahl $n_{ATL}$ der Abgasturboladerwelle wie folgt bestimmt wird:

$$p_{vT} = Z \cdot p_{nT} \text{ mit}$$

$$
\begin{aligned}
Z = {} & b_0 + b_1 \cdot dm_T + b_2 \cdot (s - 0{,}5) \\
& + b_3 \cdot s^2 + b_4 \cdot (n_{ATL} - 0{,}5)^2 \\
& + b_5 \cdot (dm_T + 0{,}5) \cdot (s + 0{,}5) \\
& + b_6 \cdot (dm_T - 0{,}5) \cdot s^2 \\
& + b_7 \cdot (s-1) \cdot (n_{ATL} - 0{,}5)^2 \\
& + b_8 \cdot (s-1) \cdot (s - 0{,}5)^2 \\
& + b_9 \cdot (dm_T - 1)^2 \\
& + b_{10} \cdot (dm_T - 1) \cdot (dm_T + 0{,}5)^2 \cdot dm_T \\
& + b_{11} \cdot [(dm_T - 1) \cdot (s - 0{,}5)^3 - 0{,}5] \cdot b_{12} \\
& + b_{13},
\end{aligned}
$$

wobei $b_0$-$b_{13}$ Koeffizienten bezeichnen.

22. Ein Verfahren gemäß einem der Punkte 1-21, wobei mit Hilfe des Modells ein Abgasgegendruck des über die Abgasrückführung zurückgeführten Abgases in Abhängigkeit von einem über die Abgasrückführung fließenden Abgasrückführmassenstrom, einer Abgastemperatur vor der Turbine und einem Abgasgegendruck des von dem Verbrennungsmotor ausgestoßenen Abgases vor der Turbine bestimmt wird.

23. Ein Verfahren gemäß 22, wobei der Abgasgegendruck $p_{AGR}$ in der Abgasrückführleitung in Abhängigkeit von dem Abgasgegendruck $p_{vT}$ vor der Turbine, dem Abgasrückführmassenstrom $dm_{AGR}$ in der Abgasrückführleitung und der Abgastemperatur $T_{vT}$ vor der Turbine wie folgt bestimmt wird:

$$p_{AGR} = p_{vT} - \left( dm_{AGR}^2 \cdot T_{vT} \cdot \frac{PF}{p_{vT}} \right),$$

wobei PF eine Abgasgegendruckkonstante bezeichnet.

24. Ein Verfahren gemäß 23, wobei die Abgasgegendruckkonstante in Abhängigkeit von einer effektiven Querschnittsfläche der Abgasrückführleitung bestimmt wird.

25. Ein Verfahren gemäß 24, wobei die Abgasgegendruckkonstante PF wie folgt aus der Gaskonstante R und der effektiven Querschnittsfläche $A_{eff}$ der Abgasrückführleitung abgeleitet wird: $PF = \dfrac{R}{A_{eff}^2} .$

26. Ein Verfahren gemäß einem der Punkte 1-25, wobei das Verfahren automatisch von einem Steuergerät, welches Bestandteil eines Motormanagementsystems des Verbrennungsmotors ist, ausgeführt wird.

27. Ein Steuersystem für einen Verbrennungsmotor mit Abgasrückführung, wobei Frischluft mit einem über die Abgasrückführung zurückgeführten Abgas des Verbrennungsmotors in einer Mischstelle gemischt und das daraus resultierende Gasgemisch einem Brennraum des Verbrennungsmotors zugeführt wird, wobei das Steuersystem derart ausgestaltet ist, dass es durch ein physikalisch basiertes Modell das Verhalten eines Abgastrakts des Verbrennungsmotors vor und nach einer dem Verbrennungsmotor zugeordneten Turbine nachbildet und mit Hilfe des Modells automatisch mindestens eine mit dem Abgastrakt verbundene Zustandsgröße aus mindestens einer weiteren Zustandsgröße bestimmt und automatisch davon abhängig den Verbrennungsmotor steuert.

28. Ein Steuersystem gemäß 27, wobei das Steuersystem zur Durchführung des Verfahrens nach einem der Punkte 1-26 ausgestaltet ist.

II. Weiteres Verfahren zur Steuerung eines Verbrennungsmotors mit Abgasrückführung sowie entsprechend ausgestaltetes weiteres Steuersystems für einen Verbrennungsmotor

Über die Abgasrückführleitung eines Verbrennungsmotors wird Abgas aus dem Abgastrakt in den Ansaugtrakt zurückgeleitet und dort an einer Mischstelle mit über den Ansaugtrakt angesaugter Frischluft gemischt. Das daraus resultierende Gasgemisch wird schließlich den Brennräumen des Verbrennungsmotors zugeführt. Für die emissionsoptimale Steuerung bzw. Regelung beispielsweise eines aufgeladenen Dieselmotors mit Abgasrückführung ist die genaue Kenntnis einer möglichst großen Anzahl von Zustandsgrößen oder Betriebsparametern von Bedeutung.

In herkömmlichen Motormanagementsystemen ist jedoch die Anzahl der erfassten bzw. bekannten Zustandsgrößen relativ gering, oder für die Erfassung der einzelnen Zustandsgrößen sind jeweils separate Sensoren erforderlich. Dies betrifft beispielsweise auch die mit dem Ansaugtrakt des jeweiligen Verbrennungsmotors verbundenen Zustandsgrößen und dort insbesondere Zustandsgrößen, welche mit dem so genannten Saugrohr oder Einlasskrümmer des Verbrennungsmotors, d.h. der Verbindung zwischen der Abgas/Frischluft-Mischstelle und den Motoreinlassventilen, zusammenhängen, wie beispielsweise die Frischluft- oder Abgasmasse oder auch die Gastemperatur in diesem Verbindungsabschnitt. Diese Zustandsgrößen können bisher allenfalls mit separaten Sensoren erfasst werden.

Zur Realisierung eines Verfahrens zur Steuerung eines Verbrennungsmotors mit Abgasrückführung sowie eines entsprechend ausgestalteten Steuersystems für einen Verbrennungsmotor, womit eine Steuerung des Verbrennungsmotors in Abhängigkeit von auf möglichst effektive Weise und ohne Erfordernis von zusätzlichen Sensoren bestimmten Zustandsgrößen dieser Verbindung zwischen der Mischstelle und den Einlassventilen des Verbrennungsmotors möglich ist, kann zur Bestimmung verschiedener auf die Verbindung bzw. den Verbindungsabschnitt zwischen der Mischstelle, an welcher rückgeführtes Abgas mit angesaugter Frischluft gemischt wird, und den Einlassventilen des Verbrennungsmotors bezogener Zustandsgrößen ein physikalisch basiertes Modell angewendet werden, welches das Verhalten dieser Verbindung nachbildet, um unter Verwendung dieses Modells automatisch verschiedene Betriebsparameter des Verbrennungsmotors emissionsoptimal steuern bzw. regeln zu können. Mit Hilfe des Modells kann beispielsweise die Frischluft- oder Abgasmasse in dieser Verbindung oder auch die Gastemperatur in dieser Verbindung aus bereits bekannten Zustandsgrößen ohne Verwendung zusätzlicher Sensoren bestimmt werden, so dass davon abhängig bestimmte Betriebsparameter des Verbrennungsmotors, wie beispielsweise die Kraftstoff-Einspritzmenge oder der Kraftstoff-Einspritzzeitpunkt etc., emissionsoptimal gesteuert bzw. geregelt werden können.

Die Frischluftmasse bzw. die Abgasmasse in der Verbindung können durch zeitliches Integrieren einer Differenz zwischen einem der Verbindung zugeführten Frischluftmassenstrom und einem von der Verbindung dem Verbrennungsmotor zugeführten Frischluftmassenstrom bzw. durch zeitliches Integrieren einer Differenz zwischen einem der Verbindung über die Abgasrückführung zugeführten Abgasmassenstrom und einem von der Verbindung dem Verbrennungsmotor zugeführten Abgasmassenstrom bestimmt werden.

Die in der Verbindung befindliche Gesamtgasmasse kann dann einfach durch Addition der in der Verbindung befindlichen Frischluftmasse und der in der Verbindung befindlichen Abgasmasse ermittelt wird.

Die Temperatur des über die Verbindung den Brennräumen des Verbrennungsmotors zugeführten Gasgemisches kann in Abhängigkeit von der Abgasmasse in der Verbindung, einer Temperatur des über die Abgasrückführung zurückgeführten Abgasrückführmassenstroms, der Frischluftmasse in der Verbindung und einer Temperatur des der Verbindung zugeführten Frischluftmassenstroms bestimmt werden, wobei der somit ermittelte Temperaturwert vorzugsweise durch einen Betrag korrigiert wird, welcher von einer Differenz zwischen einer Wandtemperatur der Verbindung und der Temperatur des Gasgemisches in der Verbindung sowie einem damit multiplizierten Faktor abhängt, wobei der Faktor wiederum von der Drehzahl des Verbrennungsmotors und einem über die Verbindung den Brennräumen des Verbrennungsmotors zugeführten Frischluftmassenstrom abhängt. Die Wandtemperatur der Verbindung kann hierzu aus einer Kühlwassertemperatur des Verbrennungsmotors und einem Wandwärmefaktor der Verbindung abgeleitet werden.

Vorzugsweise kommen mehrere physikalisch basierte (oder auch empirisch ermittelte) Modelle zur Anwendung, welche teilweise in einem engen Zusammenhang stehen, so dass vorzugsweise zur Berechnung von einer bestimmten Zustandsgröße in einem Modell auf die Ergebnisse eines anderen Modells zugegriffen wird. Dabei ist zu beachten, dass die hierin formelmäßig beschriebenen Abhängigkeiten der einzelnen Größen in der Regel lediglich die proportionalen Zusammenhänge verdeutlichen sollen, so dass abhängig von der jeweiligen Anwendung oder Implementierung gegebenenfalls (nicht angegebene) Normierungs- oder Korrekturfaktoren zur weiteren Umrechnung der entsprechenden Größen zu berücksichtigen sind.

Insgesamt können somit Zustandsgrößen des Ansaugtrakts bzw. der Verbindung zwischen der Mischstelle und den Einlassventilen eines Verbrennungsmotors, beispielsweise eines Dieselmotors, exakt und mit einfachen Mitteln durch Auswertung bereits bekannter Zustandsgrößen ermittelt werden. Die Verwendung zusätzlicher Sensoren ist hierfür nicht erforderlich. Durch die somit einfach mögliche Bestimmung der entsprechenden Zustandsgrößen sind neue Regel- und Diagnoseverfahren innerhalb des jeweiligen Motormanagementsystems möglich, was beispielsweise eine emissionsoptimale Regelung des Verbrennungsmotors erlaubt.

Dieser Erfindungsaspekt umfasst somit insbesondere die folgenden Merkmale:

1. Ein Verfahren zur Steuerung eines Verbrennungsmotors mit Abgasrückführung, wobei Frischluft mit einem über die Abgasrückführung zurückgeführten Abgas des Verbrennungsmotors an einer Mischstelle gemischt und das daraus resultierende Gasgemisch dem Brennraum des Verbrennungsmotors zugeführt wird, wobei durch ein physikalisch basiertes Modell das Verhalten einer von der Mischstelle zu dem Verbrennungsmotor führenden Verbindung, welche dem Brennraum des Verbrennungsmotors das Gasgemisch zuführt, nachgebildet und mit Hilfe des Modells mindestens eine auf diese Verbindung bezogene Zustandsgröße aus mindestens einer weiteren Zustandsgröße bestimmt wird, um davon abhängig den Verbrennungsmotor zu steuern.

2. Ein Verfahren gemäß 1, wobei eine Frischluftmasse und/oder eine Abgasmasse in der Verbindung durch zeitliches Integrieren einer Differenz zwischen einem der Verbindung zugeführten Frischluftmassenstrom und einem von der Verbindung dem Verbrennungsmotor zugeführten Frischluftmassenstrom bzw. durch zeitliches Integrieren einer Differenz zwischen einem der Verbindung über die Abgasrückführung zugeführten Abgasmassenstrom und einem von der Verbindung dem Verbrennungsmotor zugeführten Abgasmassenstrom bestimmt wird.

3. Ein Verfahren gemäß 2, wobei die in der Verbindung befindliche Frischluftmasse $m_L$ und die in der Verbindung befindliche Abgasmasse $m_{AGR}$ in Abhängigkeit von dem der Verbindung zugeführten Frischluftmassenstrom $dm_L$, dem der Verbindung zugeführten Abgasmassenstrom $dm_{AGR}$, dem von der Verbindung dem Verbrennungsmotor zugeführten Frischluftmassenstrom $dm_{Lmot}$ und dem von der Verbindung dem Verbrennungsmotor zugeführten Abqasmassenstrom $dm_{AGRmot}$ wie folgt bestimmt werden:

$$m_L = \int_{t}^{t+T_0} (dm_L - dm_{Lmot})\,d\tau \quad für\ dm_{AGR} \geq 0$$

$$m_L = \int_{t}^{t+T_0} (dm_L - dm_{Lmot} + dm_{AGR}) \quad für\ dm_{AGR} < 0$$

und

$$m_{AGR} = \int_{t}^{t+T_0} (dm_{AGR} - dm_{AGRmot})\,d\tau \quad für\ dm_{AGR} \geq 0$$

$$m_{AGR} = \int_{t}^{t+T_0} - dm_{AGRmot}\,d\tau \quad für\ dm_{AGR} < 0,$$

wobei t einen Integrationszeitpunkt und $T_0$ ein Integrationsintervall bezeichnet.

4. Ein Verfahren gemäß 2 oder 3, wobei die in der Verbindung befindliche Gesamtgasmasse durch Addition der in der Verbindung befindlichen Frischluftmasse und der in der Verbindung befindlichen Abgasmasse ermittelt wird.

5. Ein Verfahren gemäß 4, wobei mit Hilfe des Modells der in der Verbindung herrschende Druck aus der in der Verbindung befindlichen Gesamtgasmasse, einer Temperatur in der Verbindung und einem Volumen der Verbindung bestimmt wird.

6. Ein Verfahren gemäß 4 oder 5, wobei eine Abgasrückführrate durch in Beziehung setzen der in der Verbindung befindlichen Abgasmasse zu der in der Verbindung befindlichen Gesamtgasmasse bestimmt wird.

7. Ein Verfahren gemäß einem der Punkte 1-6, wobei mit Hilfe des Modells eine Temperatur des über die Verbindung dem Brennraum des Verbrennungsmotors zugeführten Gasgemisches bestimmt wird.

8. Ein Verfahren gemäß 7 und einem der Punkte 2-6, wobei mit Hilfe des Modells die Temperatur des über die Verbindung dem Brennraum des Verbrennungsmotors zugeführten Gasgemisches in Abhängigkeit von der Abgasmasse in der Verbindung, einer Temperatur des über die Abgasrückführung zurückgeführten Abgasrückführmassenstroms, der Frischluftmasse in der Verbindung und einer Temperatur des der Verbindung zugeführten Frischluftmassenstroms bestimmt wird.

9. Ein Verfahren gemäß 8, wobei die Temperatur $T_{sr}$ des Gasgemisches in der Verbindung in Abhängigkeit von der Abgasrückführmasse $m_{AGR}$ in der Verbindung, der Temperatur $T_{AGR}$ des Abgasrückführmassenstroms, der Frischluftmasse $m_L$ in der Verbindung und der Temperatur $T_{lad}$ des zugeführten Frischluftmassenstroms wie folgt bestimmt wird:

$$T_{sr} = \frac{T_{AGR} \cdot m_{AGR} + T_{lad} \cdot m_L}{m_{AGR} + m_L} \quad für\ m_{AGR} + m_L \neq 0$$

*und*

$$T_{sr} = T_{lad} \ \text{für} \ m_{AGR} + m_L = 0.$$

10. Ein Verfahren gemäß einem der Punkte 7-9, wobei die Temperatur des Gasgemisches in der Verbindung durch einen Betrag korrigiert wird, welcher von einer Differenz zwischen einer Wandtemperatur der Verbindung und der Temperatur des Gasgemisches in der Verbindung sowie einem damit multiplizierten Faktor abhängt, wobei der Faktor wiederum von der Drehzahl des Verbrennungsmotors und einem über die Verbindung dem Brennraum des Verbrennungsmotors zugeführten Frischluftmassenstrom abhängt.

11. Ein Verfahren gemäß 10, wobei die Wandtemperatur der Verbindung aus einer Kühlwassertemperatur des Verbrennungsmotors und einem Wandwärmefaktor der Verbindung abgeleitet wird.

12. Ein Verfahren gemäß einem der Punkte 1-11, wobei das Verfahren automatisch von einem Steuergerät, welches Bestandteil eines Motormanagementsystems des Verbrennungsmotors ist, ausgeführt wird.

13. Ein Steuersystem für einen Verbrennungsmotor mit Abgasrückführung, wobei Frischluft mit einem über die Abgasrückführung zurückgeführten Abgas des Verbrennungsmotors in einer Mischstelle gemischt und das daraus resultierende Gasgemisch einem Brennraum des Verbrennungsmotors zugeführt wird, wobei das Steuersystem derart ausgestaltet ist, dass es durch ein physikalisch basiertes Modell das Verhalten einer von der Mischstelle zu dem Verbrennungsmotor führenden Verbindung, welche dem Brennraum des Verbrennungsmotors das Gasgemisch zuführt, nachbildet und mit Hilfe des Modells automatisch mindestens eine auf diese Verbindung bezogene Zustandsgröße aus mindestens einer weiteren Zustandsgröße bestimmt und automatisch davon abhängig den Verbrennungsmotor steuert.

14. Ein Steuersystem gemäß 13, wobei das Steuersystem zur Durchführung des Verfahrens nach einem der Punkte 1-12 ausgestaltet ist.

<u>III. Verfahren zur Bestimmung des Frischluftmassenstroms eines Verbrennungsmotors mit Abgasrückführung sowie entsprechend ausgestaltetes Steuersystem für einen Verbrennungsmotor</u>

Für die emissionsoptimale Regelung beispielsweise eines aufgeladenen Dieselmotors mit Abgasrückführung ist die genaue Kenntnis einer möglichst großen Vielzahl von Zustandsgrößen oder Betriebsparametern von Bedeutung. Über die Abgasrückführleitung eines Verbrennungsmotors wird Abgas aus dem Abgastrakt in den Ansaugtrakt zurückgeleitet und dort mit angesaugter Frischluft gemischt, um schließlich das Frischluft/Abgasgemisch dem Verbrennungsmotor zuzuführen.

In herkömmlichen Motormanagementsystemen ist jedoch die Anzahl der erfassten bzw. bekannten Zustandsgrößen relativ gering, oder für die Erfassung der einzelnen Zustandsgrößen sind jeweils separate Sensoren erforderlich. Dies betrifft beispielsweise auch verschiedene mit dem Ansaugtrakt des Verbrennungsmotors verbundene Zustandsgrößen, wie beispielsweise den Frischluftmassenstrom.

Zur Realisierung eines Verfahrens zur Bestimmung des Frischluftmassenstroms eines Verbrennungsmotors mit Abgasrückführung sowie eines entsprechend ausgestalteten Steuersystems für einen Verbrennungsmotor, womit mit möglichst einfachen Mitteln eine exakte Bestimmung des Frischluftmassenstroms ohne Verwendung eines separaten Sensors möglich ist, kann zur Bestimmung des Frischluftmassenstroms ein physikalisch basiertes Modell zur Nachbildung des Speicherverhaltes des Ansaugtrakts des Verbrennungsmotors zwischen dem Verdichter und der Mischstelle, an welcher angesaugte Frischluft mit zurückgeführtem Abgas gemischt wird, durch Modellierung eines Speichervolumens für die von dem Ansaugtrakt angesaugte Frischluft mit einer anschließenden Drosselstelle angewendet werden, wobei zur Steuerung des Verbrennungsmotors automatisch mit Hilfe des Modells der über den Ansaugtrakt zu der Mischstelle fließende Frischluftmassenstrom bestimmt wird.

Der über den Ansaugtrakt zu der Mischstelle fließende Frischluftmassenstrom kann in Abhängigkeit von der Temperatur und dem Druck der Frischluft sowie der effektiven Querschnittsfläche der Drosselstelle bestimmt werden.

Der Druck der Frischluft kann wiederum in Abhängigkeit von der zwischen dem Verdichter und der Mischstelle befindlichen Frischluftmasse und der Temperatur der Frischluft bestimmt werden.

Die Frischluftmasse kann durch zeitliches Integrieren der Frischluftmassenstromdifferenz zwischen dem in den Verdichter fließenden Frischluftmassenstrom und dem von dem Verdichter zu der Mischstelle fließenden Frischluftmassenstrom ermittelt wird.

Gemäß einem weiteren Ausführungsbeispiel kann der Frischluftmassenstrom auch in Abhängigkeit von der Abgasturboladerdrehzahl des Verbrennungsmotors bestimmt werden. Dabei geht neben der Abgasturboladerdrehzahl beispielsweise auch der Ladedruck, der Atmosphären- oder Umgebungsdruckdruck und die Atmosphären- oder Umgebungstemperatur in die Bestimmung des Frischluftmassenstroms ein.

Vorzugsweise kommen mehrere physikalisch basierte (oder auch empirisch ermittelte) Modelle zur Anwendung, welche teilweise in einem engen Zusammenhang stehen, so dass vorzugsweise zur Berechnung von einer bestimmten Zustandsgröße in einem Modell auf die Ergebnisse eines anderen Modells zugegriffen wird. Dabei ist zu beachten, dass die hierin formelmäßig beschriebenen Abhängigkeiten der einzelnen Größen in der Regel lediglich die proportionalen Zusammenhänge verdeutlichen sollen, so dass abhängig von der jeweiligen Anwendung oder Implementierung gegebenenfalls (nicht angegebene) Normierungs- oder Korrekturfaktoren zur weiteren Umrechnung der entsprechenden Größen zu berücksichtigen sind.

Insgesamt kann somit der Frischluftmassenstrom eines Verbrennungsmotors, beispielsweise eines Dieselmotors, exakt und mit einfachen Mitteln durch Auswertung bereits bekannter Zustandsgrößen ermittelt werden. Die Verwendung zusätzlicher Sensoren, insbesondere eines üblicherweise zur Bestimmung des Frischluftmassenstroms im Ansaugtrakt benötigten Heißfilm-Luftmassenmessers, ist hierfür nicht erforderlich. Durch die somit einfach mögliche Bestimmung des Abgasrückführmassenstroms sind neue Regel- und Diagnoseverfahren innerhalb des jeweiligen Motormanagementsystems möglich, was beispielsweise eine emissionsoptimale Regelung des Verbrennungsmotors erlaubt.

Dieser Erfindungsaspekt umfasst somit insbesondere die folgenden Merkmale:

1. Ein Verfahren zur Bestimmung des Frischluftmassenstroms eines Verbrennungsmotors mit Abgasrückführung, wobei Frischluft mit einem über die Abgasrückführung zurückgeführten Abgas des Verbrennungsmotors an einer Mischstelle gemischt und das daraus resultierende Gasgemisch dem Brennraum des Verbrennungsmotors zugeführt wird, wobei mit Hilfe eines physikalisch basierten Modells das Speicherverhalten eines Ansaugtrakts des Verbrennungsmotors zwischen einem dem Verbrennungsmotor zugeordneten Verdichter und der Mischstelle durch Modellierung eines Speichervolumens für die von dem Ansaugtrakt angesaugte Frischluft mit einer anschließenden Drosselstelle nachgebildet und mit Hilfe des Modells der über den Ansaugtrakt zu der Mischstelle fließende Frischluftmassenstrom bestimmt wird.

2. Ein Verfahren gemäß 1, wobei der über den Ansaugtrakt zu der Mischstelle fließende Frischluftmassenstrom in Abhängigkeit von einer Temperatur und einem Druck der Frischluft sowie einer effektiven Querschnittsfläche der Drosselstelle bestimmt wird.

3. Ein Verfahren gemäß 2, wobei der Frischluftmassenstrom $dm_L$ in Abhängigkeit von der Temperatur $T_{lad}$ der Frischluft, dem Druck $p_{lad\,mod}$ der Frischluft, der effektiven Querschnittsfläche $A_{dr}$ der Drosselstelle und einer Durchflusskenngröße DF wie folgt bestimmt wird:

$$dm_L = A_{dr} \cdot p_{lad\,mod} \cdot \frac{2}{\sqrt{R \cdot T_{lad}}} \cdot DF\,.$$

4. Ein Verfahren gemäß 2 oder 3, wobei der Druck der Frischluft in Abhängigkeit von einer zwischen dem Verdichter und der Mischstelle befindlichen Frischluftmasse und der Temperatur der Frischluft bestimmt wird.

5. Ein Verfahren gemäß 4, wobei der Druck $p_{lad\,mod}$ der Frischluft in Abhängigkeit von der Frischluftmasse $m_{lad}$, dem Speichervolumen $V_L$ und der Temperatur $T_{lad}$ der Frischluft wie folgt bestimmt wird:

$$p_{lad\,mod} = m_{lad} \cdot \frac{R}{V_L} \cdot T_{lad}\,,$$

wobei R eine Gaskonstante bezeichnet.

6. Ein Verfahren gemäß 4 oder 5, wobei die Frischluftmasse durch zeitliches Integrieren einer Frischluftmassenstromdifferenz zwischen einem in den Verdichter fließenden Frischluftmassenstrom und dem von dem Verdichter zu der Mischstelle fließenden Frischluftmassenstrom ermittelt wird.

7. Ein Verfahren gemäß einem der Punkte 1-6, wobei das Verfahren automatisch von einem Steuergerät, welches Bestandteil eines Motormanagementsystems des Verbrennungsmotors ist, ausgeführt wird.

8. Ein Verfahren zur Bestimmung des Frischluftmassenstroms eines Verbrennungsmotors mit Abgasrückführung, wobei Frischluft mit einem über die Abgasrückführung zurückgeführten Abgas des Verbrennungsmotors an einer Mischstelle gemischt und das daraus resultierende Gasgemisch dem Brennraum des Verbrennungsmotors zugeführt wird, wobei eine Drehzahl eines dem Verbrennungsmotor zugeordneten Abgasturboladers erfasst und aus der Drehzahl der zu der Mischstelle fließende Frischluftmassenstrom bestimmt wird.

9. Ein Verfahren gemäß 8, wobei der Frischluftmassenstrom in Abhängigkeit von der Drehzahl des Abgasturboladers, einem Druck, mit dem die Frischluft der Mischstelle zugeführt wird, einem Atmosphärendruck und einer Atmosphärentemperatur bestimmt wird.

10. Ein Steuersystem für einen Verbrennungsmotor mit Abgasrückführung, wobei Frischluft mit einem über die Abgasrückführung zurückgeführten Abgas des Verbrennungsmotors in einer Mischstelle gemischt und das daraus resultierende Gasgemisch einem Brennraum des Verbrennungsmotors zugeführt wird, wobei das Steuersystem derart ausgestaltet ist, dass es mit Hilfe eines physikalisch basierten Modells das Speicherverhalten eines Ansaugtrakts des Verbrennungsmotors zwischen einem dem Verbrennungsmotor zugeordneten Verdichter und der Mischstelle durch Modellierung eines Speichervolumens für die von dem Ansaugtrakt angesaugte Frischluft mit einer anschließenden Drosselstelle nachbildet und zur Steuerung des Verbrennungsmotors automatisch mit Hilfe des Modells den über den Ansaugtrakt zu der Mischstelle fließende Frischluftmassenstrom bestimmt, um davon abhängig den Verbrennungsmotor zu steuern.

11. Ein Steuersystem gemäß 10, wobei Steuersystem zur Durchführung des Verfahrens nach einem der Punkte 1-7 ausgestaltet ist.

12. Ein Steuersystem für einen Verbrennungsmotor mit Abgasrückführung, wobei Frischluft mit einem über die Abgasrückführung zurückgeführten Abgas des Verbrennungsmotors in einer Mischstelle gemischt und das daraus resultierende Gasgemisch einem Brennraum des Verbrennungsmotors zugeführt wird, wobei das Steuersystem derart ausgestaltet ist, dass es den zu der Mischstelle fließenden Frischluftmassenstrom aus einer Drehzahl eines dem Verbrennungsmotor zugeordneten Abgasturboladers bestimmt, um davon abhängig den Verbrennungsmotor zu steuern.

13. Steuersystem gemäß 12, wobei das Steuersystem derart ausgestaltet ist, dass es den Frischluftmassenstrom in Abhängigkeit von der Drehzahl des Abgasturboladers, einem Druck, mit dem die Frischluft der Mischstelle zugeführt wird, einem Atmosphärendruck und einer Atmosphärentemperatur bestimmt.

<u>IV. Verfahren zur Bestimmung des Abgasrückführmassenstroms eines Verbrennungsmotors mit Abgasrückführung sowie entsprechend ausgestaltetes Steuersystem für einen Verbrennungsmotor</u>

Für die emissionsoptimale Regelung beispielsweise eines aufgeladenen Dieselmotors mit Abgasrückführung ist die genaue Kenntnis einer möglichst großen Vielzahl von Zustandsgrößen oder Betriebsparametern von Bedeutung.
In herkömmlichen Motormanagementsystemen ist jedoch die Anzahl der erfassten bzw. bekannten Zustandsgrößen relativ gering, oder für die Erfassung der Zustandsgrößen sind jeweils separate Sensoren erforderlich. Dies betrifft beispielsweise auch den über die Abgasrückführleitung eines Verbrennungsmotors mit Abgasrückführung fließende Abgasrückführmassenstrom. Über die Abgasrückführleitung eines Verbrennungsmotors wird Abgas aus dem Abgastrakt in den Ansaugtrakt zurückgeleitet.
Zur Realisierung eines Verfahrens zur Bestimmung des Abgasrückführmassenstroms eines Verbrennungsmotors mit Abgasrückführung sowie eines entsprechend ausgestalteten Steuersystems für einen Verbrennungsmotor, womit mit möglichst einfachen Mitteln eine exakte Bestimmung des Abgasrückführmassenstroms ohne Verwendung eines separaten Sensors möglich ist, kann ein physikalisch basiertes Modell angewendet werden, welches ein in der Abgasrückführung des Verbrennungsmotors angeordnetes Abgasrückführventil als eine Drosselstelle nachbildet. Dadurch kann der Abgasrückführmassenstrom in Abhängigkeit von dem Abgasgegendruck und der Temperatur des zurückgeführten Abgases vor dem Abgasrückführventil bestimmt werden, wobei insbesondere auch eine Durchflusskenngröße, eine effektive Querschnittsfläche des Abgasrückführventils und die Gaskonstante in dem physikalisch basierten Modell zur Bestimmung des Abgasrückführmassenstroms berücksichtigt werden.

Der Verlauf der Temperatur des über die Abgasrückführung zurückgeführten Abgases wird vorzugsweise mit Hilfe des Modells nachgebildet, um daraus die jeweils aktuelle Temperatur des zurückgeführten Abgases vor dem Abgasrückführventil abzuleiten.

Die effektive Querschnittsfläche des Abgasrückführventils kann in Abhängigkeit von einem Vergleich zwischen dem jeweils gemessenen Ladedruck, mit welchem die Frischluft der Mischstelle zugeführt wird, und einem mit Hilfe eines weiteren Modells modellierten Ladedruck durch Verwendung eines entsprechenden Korrekturfaktors angepasst werden.

Die zuvor erwähnte Durchflusskenngröße kann beispielsweise aus dem Druckverhältnis über dem Abgasrückführventil abgeleitet werden.

Vorzugsweise kommen mehrere physikalisch basierte (oder auch empirisch ermittelte) Modelle zur Anwendung, welche teilweise in einem engen Zusammenhang stehen, so dass vorzugsweise zur Berechnung von einer bestimmten Zustandsgröße in einem Modell auf die Ergebnisse eines anderen Modells zugegriffen wird. Dabei ist zu beachten, dass die hierin formelmäßig beschriebenen Abhängigkeiten der einzelnen Größen in der Regel lediglich die proportionalen Zusammenhänge verdeutlichen sollen, so dass abhängig von der jeweiligen Anwendung oder Implementierung gegebenenfalls (nicht angegebene) Normierungs- oder Korrekturfaktoren zur weiteren Umrechnung der entsprechenden Größen zu berücksichtigen sind.

Insgesamt kann somit der Abgasrückführmassenstrom eines Verbrennungsmotors, beispielsweise eines Dieselmotors, exakt und mit einfachen Mitteln durch Auswertung bereits bekannter Zustandsgrößen ermittelt werden. Die Verwendung zusätzlicher Sensoren ist hierfür nicht erforderlich. Durch die somit einfach mögliche Bestimmung des Abgasrückführmassenstroms sind neue Regel- und Diagnoseverfahren innerhalb des jeweiligen Motormanagementsystems möglich, was beispielsweise eine emissionsoptimale Regelung des Verbrennungsmotors erlaubt.

Dieser Erfindungsaspekt umfasst somit insbesondere die folgenden Merkmale:

1. Ein Verfahren zur Bestimmung des Abgasrückführmassenstroms eines Verbrennungsmotors mit Abgasrückführung, wobei Frischluft mit einem über die Abgasrückführung zurückgeführten Abgas des Verbrennungsmotors an einer Mischstelle gemischt und das daraus resultierende Gasgemisch dem Brennraum des Verbrennungsmotors zugeführt wird, wobei ein in der Abgasrückführung angeordnetes Abgasrückführventil mit Hilfe eines physikalisch basierten Modells für eine Drosselstelle nachgebildet und der über die Abgasrückführung zu der Mischstelle fließende Abgasrückführmassenstrom mit Hilfe dieses Modells bestimmt wird.

2. Ein Verfahren gemäß 1, wobei der Abgasrückführmassenstrom in Abhängigkeit von einem Abgasgegendruck und einer Temperatur des zurückgeführten Abgases vor dem Abgasrückführventil bestimmt wird.

3. Ein Verfahren gemäß 2, wobei der Verlauf der Temperatur des über die Abgasrückführung zurückgeführten Abgases mit Hilfe des Modells nachgebildet und daraus die Temperatur des zurückgeführten Abgases vor dem Abgasrückführventil abgeleitet wird.

4. Ein Verfahren gemäß 2 oder 3, wobei der Abgasrückführmassenstrom in Abhängigkeit von einer Durchflusskenngröße; einer effektiven Querschnittsfläche des Abgasrückführventils und einer Gaskonstante bestimmt wird.

5. Ein Verfahren gemäß 4, wobei der Abgasrückführmassenstrom $dm_{AGR}$ aus der effektiven Querschnittsfläche $A_{AGR}$ des Abgasrückführventils, dem Abgasgegendruck $p_{AGR}$, der Temperatur $T_{AGR}$ des zurückgeführten Abgases, der Gaskonstante R und der Durchflusskenngröße DF wie folgt ermittelt wird:

$$dm_{AGR} \;=\; A_{AGR} \;\cdot\; p_{AGR} \;\cdot\; \frac{2}{\sqrt{R \;\cdot\; T_{AGR}}} \;\cdot\; DF,$$

wobei für den Fall, dass der Abgasrückführmassenstrom von einem Ansaugtrakt des Verbrennungsmotors in einen Abgastrakt des Verbrennungsmotors strömt, als Wert für den Abgasgegendruck der Ladedruck der Frischluft in dem Ansaugtrakt und als Wert für die Temperatur die Ladetemperatur der Frischluft in dem Ansaugtrakt verwendet wird.

6. Ein Verfahren gemäß 4 oder 5, wobei die effektive Querschnittsfläche des Abgasrückführventils in Abhängigkeit von einem Vergleich zwischen einem gemessenen Ladedruck, mit welchem die Frischluft der Mischstelle zugeführt wird, und einem mit Hilfe eines weiteren Modells modellierten Ladedruck durch Verwendung eines entsprechenden Korrekturfaktors angepasst wird.

7. Ein Verfahren gemäß einem der Punkte 4-6, wobei die Durchflusskenngröße aus einem Druckverhältnis über dem Abgasrückführventil abgeleitet wird.

8. Ein Verfahren gemäß einem der Punkte 1-7, wobei das Verfahren automatisch von einem Steuergerät, welches Bestandteil eines Motormanagementsystems des Verbrennungsmotors ist, ausgeführt wird.

9. Ein Steuersystem für einen Verbrennungsmotor mit Abgasrückführung, wobei Frischluft mit einem über die Abgasrückführung zurückgeführten Abgas des Verbrennungsmotors in einer Mischstelle gemischt und das daraus resultierende Gasgemisch einem Brennraum des Verbrennungsmotors zugeführt wird, wobei das Steuersystem derart ausgestaltet ist, dass es zur Steuerung des Verbrennungsmotors automatisch den über die Abgasrückführung zu der Mischstelle fließende Abgasrückführmassenstrom mit Hilfe eines physikalisch basierten Modells, welches ein in der Abgasrückführung angeordnetes Abgasrückführventil als eine Drosselstelle nachbildet, bestimmt.

10. Ein Steuersystem gemäß 9, wobei das Steuersystem zur Durchführung des Verfahrens nach einem der Punkte 1-8 ausgestaltet ist.

Die vorliegende Erfindung wird nachfolgend näher unter Bezugnahme auf die beigefügte Zeichnung anhand eines bevorzugten Ausführungsbeispiels erläutert.

Figur 1 zeigt eine vereinfachte Darstellung eines Simulationsmodells zur Simulierung des Gasstroms in einem Kraftfahrzeug bzw. einem entsprechenden Verbrennungsmotor gemäß der vorliegenden Erfindung,

Figur 2 zeigt eine Darstellung zur Erläuterung eines Motorfüllungsmodells,

Figur 3 zeigt eine Darstellung zur Erläuterung eines Abgasrückführmassenstrommodells,

Figur 4 zeigt eine Darstellung zur Erläuterung eines Turbinenmodells,

Figur 5 zeigt eine schematische Darstellung des Ansaugtrakts des in Figur 1 dargestellten Verbrennungsmotors,

Figur 6 zeigt eine Darstellung zur Erläuterung eines Frischluftmassenstrommodells,

Figur 7 zeigt eine schematische Darstellung des Ansaugtrakts des in Figur 1 dargestellten Verbrennungsmotors,

Figur 8 zeigt eine Darstellung zur Erläuterung eines Saugrohrmodells,

Figur 9 zeigt eine Darstellung zur Erläuterung eines Saugrohrtemperaturmodells, und

Figur 10 zeigt den Verlauf einer Durchflusskenngröße in Abhängigkeit von einem Druckverhältnis.

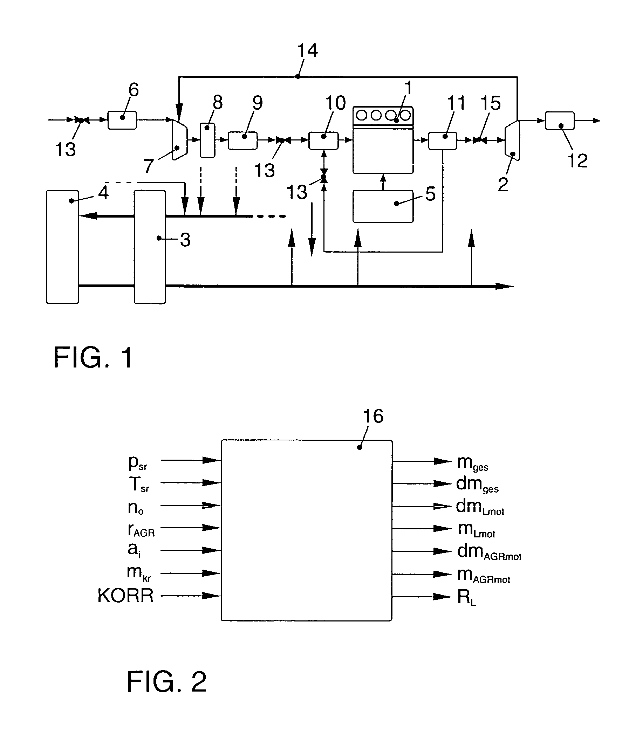

In Figur 1 ist ein Verbrennungsmotor 1 mit vier Brennräumen bzw. Zylindern dargestellt. Der Verbrennungsmotor 1 ist mit einem Abgasturbolader (ATL) gekoppelt, welcher eine Turbine 2 und einen Verdichter 7 umfasst, wobei die Turbine und der Verdichter 7 auf einer gemeinsamen Welle, der sogenannten Turboladerwelle 14, angebracht sind. Die Turbine 2 nutzt die im Abgas des Verbrennungsmotors 1 enthaltene Energie zum Antrieb des Verdichters 7, welcher über ein Luftfilter 6 Frischluft ansaugt und vorverdichtete Luft in die einzelnen Brennräume des Verbrennungsmotors 1 drückt. Der durch die Turbine 2, den Verdichter 7 und die Turboladerwelle 14 gebildete Abgasturbolader ist nur durch den Luft- und Abgasmassenstrom strömungstechnisch mit dem Verbrennungsmotors 1 gekoppelt.

Die von dem Verdichter 7 über den Luftfilter 6 angesaugte und vorverdichtete Luft wird über einen Ladeluftkühler (LLK) 8, welcher die Abgastemperatur und damit die $NO_x$-Emission sowie den Kraftstoffverbrauch reduziert, einem sogenannten Ersatzvolumen (ERS) 9 zugeführt. Den einzelnen Brennräumen des Verbrennungsmotors 1 ist ein Einlasssammler (ELS) 10 vorgeschaltet. Das in den Brennräumen des Verbrennungsmotors 1 erzeugte Abgas wird von einem Abgassammler (ASA) 11 gesammelt und der Turbine 2 zugeführt. Der Turbine 2 ist in Abgasströmungsrichtung die Abgasanlage (APU) 12 des Kraftfahrzeugs nachgeschaltet, welche die Schadstoffanteile der beim Betrieb des Verbrennungsmotors 1 entstehenden Abgase abbaut und die verbleibenden Abgase so geräuscharm wie möglich ableitet. Ein Teil des in den Brennräumen des Verbrennungsmotors 1 erzeugten Abgases wird von dem Abgassammler 11 über eine Abgasrückführung (AGR) an den Einlasssammler 10 zurückgeführt und dort mit der angesaugten Frischluft

gemischt. Mit dem Bezugzeichen 13 sind jeweils in entsprechenden Luft- oder Gaspfaden angeordnete Ventile bezeichnet. Mit dem Bezugzeichen 15 ist ein Stellglied zur Leitschaufelverstellung der Turbine 2 bezeichnet.

Des Weiteren ist in Figur 1 ein Steuergerät 4 dargestellt, welches ein Bestandteil eines entsprechenden Motormanagementsystems des Kraftfahrzeugs ist. Von dem Steuergerät 4 werden verschiedene Größen oder Parameter des dargestellten Motorsystems überwacht, und durch Anwendung entsprechender gespeicherter physikalisch basierter Modelle in verschiedene Zwischen- und Ausgangsgrößen umgerechnet, wobei die von dem Steuergerät 4 überwachten Größen bzw. Parameter über eine Schnittstelle 3 dem Steuergerät 4 zugeführt werden. Die einzelnen von dem Steuergerät 4 ausgewerteten Größen werden nachfolgend näher anhand der einzelnen physikalisch basierten Modelle ausführlich erläutert. Insbesondere wird von dem Steuergerät 4 auf diese Weise die Masse und Zusammensetzung des in den Brennräumen des Verbrennungsmotors 1 befindlichen Gasgemisches, d.h. die darin befindliche Frischluft- und Abgasmasse, bestimmt und zur Erzielung einer emissionsoptimalen Regelung in entsprechende Stellsignale für das Motorsystem umgesetzt, welche - wie in Figur 1 angedeutet ist - über die Schnittstelle 3 an verschiedene Komponenten des Motorsystems angelegt werden können.

Für eine stabile Berechnung des durch die einzelnen physikalisch basierten Modelle gebildeten Gesamtmodells durch das Steuergerät 4 ist für einige Teile des Gesamtmodells eine bestimmte minimale effektive Rechenzeit, beispielsweise in der Größenordnung von 2 ms, erforderlich. Da dies mit herkömmlichen Steuergerätekonzepten nicht realisierbar ist, wird vorzugsweise ein bereits vorhandenes zeitsynchrones Raster als Basis verwendet und das Gesamtmodell mehrmals in diesem Raster (überabtastend) berechnet. Um beispielsweise bei einem vorhandenen 20 ms-Raster auf eine effektive Rechenzeit von 2 ms zu kommen, muss das Gesamtmodell zehnmal innerhalb des vorgegebenen Rasters berechnet werden. Da das Gesamtmodell, welches sich aus den einzelnen zuvor erwähnten physikalisch basierten Teilmodellen zusammensetzt, zur Füllungserfassung von Verbrennungsmotoren, d.h. zur exakten Bestimmung der Frischluft- und Abgasmasse in den Brennräumen des jeweiligen Verbrennungsmotors, dient, kann das Gesamtmodell auch als Füllungsmodell bezeichnet werden.

Eines dieser von dem Steuergerät 4 ausgeführten physikalisch basierten Teilmodelle dient zur Nachbildung der Befüllung des jeweiligen Brennraums des Verbrennungsmotors 1 mit dem Frischluft-Abgasgemisch aus dem sogenannten Einlasskrümmer. Als Einlasskrümmer wird dabei die Verbindung zwischen der in Figur 1 dargestellten Mischstelle 10, von welcher die über den Verdichter 7 angesaugte Frischluft mit dem über die Abgasrückführleitung zurückgeführten Abgas gemischt wird, und den Einlassventilen des Verbrennungsmotors 1 bezeichnet. Dieses Modell kann somit auch als Motorfüllungsmodell bezeichnet werden.

Mit Hilfe dieses Motorfüllungsmodells kann die angesaugte Gasmasse im Brennraum in Abhängigkeit von dem Druck $p_{sr}$ und der Temperatur $T_{sr}$ des Ansauggases, welche bei Berücksichtigung der Gaskonstante R die Dichte des Ansauggases definieren, vor den Motoreinlassventilen, d.h. im Einlasskrümmer, bestimmt werden, wobei hierzu ein linearer Ansatz in Abhängigkeit von der Dichte des Ansauggases gewählt wird:

$$(1) \quad m_{ges} = d_1(n_0) + d_2(n_0) \cdot \frac{p_{sr}}{R \cdot T_{sr}} \cdot KORR$$

Dabei bezeichnet $m_{ges}$ die angesaugte Gasmasse im Brennraum, d.h. die Masse des angesaugten Frischluft/Abgasgemisches, $n_0$ die (normierte) Motordrehzahl und KORR einen Korrekturfaktor, auf welchen nachfolgend noch näher eingegangen wird. Das Füllungsverhalten des Verbrennungsmotors 1 ist abhängig von der Motordrehzahl $n_0$. Die Koeffizienten $d_1$ und $d_2$ sind daher eine Funktion der Motordrehzahl $n_0$. Diese Abhängigkeit von der Motordrehzahl kann durch quadratische Polynome dargestellt werden:

$$(2) \quad d_1 = a_1 + a_2 \cdot n_0 + a_3 \cdot n_0^2$$

$$d_2 = a_4 + a_5 \cdot n_0 + a_6 \cdot n_0^2.$$

Dabei bezeichnen $a_1$-$a_6$ Koeffizienten dieser quadratischen Polynome. Wahlweise kann die zuvor beschriebene Abhängigkeit von der Motordrehzahl auch durch drehzahlabhängige Kennlinien realisiert werden, wobei in dem Steuergerät 4 zwischen diesen Alternativen beispielsweise in Abhängigkeit von dem augenblicklichen Wert einer entsprechenden Variable umgeschaltet werden kann.

Die Füllung des Brennraums des Verbrennungsmotors 1 setzt sich aus Anteilen von Frischluft und zurückgeführtem Abgas zusammen. Aus der zuvor bestimmten Gasmasse $m_{ges}$ im Brennraum und der aktuellen Motordrehzahl n des Verbrennungsmotors 1 kann der angesaugte Gasmassenstrom $dm_{ges}$ berechnet werden. Der Frischluftmassenstrom $dm_{Lmot}$ in den Verbrennungsmotor 1 ergibt sich in Abhängigkeit von dem angesaugten Gasmassenstrom $dm_{ges}$ und der aktuellen Abgasrückführrate $r_{AGR}$ wie folgt:

$$(3)\ dm_{Lmot} = (1 - r_{AGR}) \cdot dm_{ges}$$

Der angesaugte Gasmassenstrom $dm_{ges}$ bzw. der angesaugte Luftmassenstrom $dm_{Lmot}$ werden vorzugsweise in der Einheit kg/s berechnet. Selbstverständlich ist ebenso eine Umrechnung in kg/h möglich.

Als eine weitere Zwischengröße, welche als Grundlage für die Berechnung des Luftverhältnisses in dem Brennraum dienen kann, kann die Frischluftmasse $m_{Lmot}$ in dem Brennraum des Verbrennungsmotors 1 wie folgt ermittelt werden:

$$(4)\ m_{Lmot} = (1 - r_{AGR}) \cdot m_{ges}$$

Analog kann der in dem Verbrennungsmotor 1 angesaugte Abgasrückführmassenstrom $dm_{AGRmot}$ aus dem angesaugten Gasmassenstrom $dmg_{es}$ und der aktuellen Abgasrückführrate $r_{AGR}$ wie folgt berechnet werden:

$$(5)\ dm_{AGRmot} = r_{AGR} \cdot dm_{ges}$$

Analog zu der Frischluftmasse im Brennraum des Verbrennungsmotors kann auch die Abgasmasse $m_{AGRmot}$ im Brennraum des Verbrennungsmotors aus der bereits bekannten angesaugten Gasmasse $m_{ges}$ ermittelt werden:

$$(6)\ m_{AGRmot} = r_{AGR} \cdot m_{ges}$$

Als weitere Ausgangsgröße wird von dem Motorfüllungsmodell das Luftverhältnis $R_L$ im Brennraum des Verbrennungsmotors 1 aus der nunmehr bekannten Frischluftmasse $m_{Lmot}$ und der eingespritzten Kraftstoffmasse $m_{kr}$ ermittelt:

$$(7)\ R_L = \frac{m_{Lmot}}{14,5 \cdot m_{kr}}$$

Mit Hilfe des zuvor erwähnten Korrekturfaktors KORR kann das Motorfüllungsmodell an das tatsächliche Verhalten des Verbrennungsmotors angepasst werden, wobei hierzu ein Vergleich zwischen einem modellierten Ladedruck $p_{ladmod}$ und einem gemessenen tatsächlichen Ladedruck $p_{lad}$ erfolgt. Dieser Vergleich kann in einem weiteren Teilmodell, welches als Korrekturmodell bezeichnet werden kann, durchgeführt werden. Durch die Differenz dieser beiden Größen kann ein Integrator gespeist werden, dessen Ausgangswert den anteiligen Korrekturfaktor KORR für die Gesamtfüllung des Verbrennungsmotors 1 ergibt. Für diesen Adaptionsvorgang müssen bevorzugt definierte Bedingungen, wie beispielsweise ein stationärer Motorbetrieb ohne Abgasrückführung, vorliegen. Das Steuergerät 4 kann zu diesem Zweck einen separaten Funktionsblock beinhalten, welcher die Adaptionsfreigabe, d.h. den Integrator, steuert und hierzu bestimmte Eingangsgrößen, welche beispielsweise den erlaubten Adaptionsbereich hinsichtlich Einspritzmenge und Drehzahl festlegen bzw. die zeitliche Änderung dieser Größen überwachen, auswertet. Darüber hinaus können diesem Funktionsblock zusätzliche Parameter zugeführt sein, mit deren Hilfe der maximale Dynamikbereich des Frischluftmassenstroms und des Ladedrucks eingestellt werden können, wobei bevorzugt ein Ein- und Auschaltverhalten mit Hysterese realisiert sein kann. Die Ausgangsgröße KORR dieses Funktionsblocks des Steuergeräts 4 korrigiert gemäß Formel (1) die Steigung der Füllungsgeraden und passt somit das Motorfüllungsmodell an das tatsächliche Verhalten des Verbrennungsmotors 1 an.

Das zuvor beschriebene Motorfüllungsmodell 16, welches in dem Steuergerät 4 implementiert ist, ist schematisch hinsichtlich seiner Eingangs- und Ausgangsgrößen in Figur 2 dargestellt.

Über die in Figur 1 angedeutete Abgasrückführleitung wird - wie bereits erwähnt worden ist - Abgas aus dem Abgastrakt in den Ansaugtrakt zurückgeleitet. Es ist daher ein weiteres physikalisch basiertes Modell vorgesehen, welches den Abgasrückführmassenstrom durch die Abgasrückführleitung sowie die Temperatur der zurückgeführten Abgase vor der Abgasrückführung-Mischstelle 10 berechnet, so dass dieses Modell auch nachfolgend als Abgasrückführmassenstrommodell bezeichnet wird.

Die Bestimmung des Abgasrückführmassenstroms $dm_{AGR}$ erfolgt mit Hilfe eines Modellansatzes für eine Drosselstelle des in der Abgasrückführleitung vorhandenen Abgasrückführventils 13 (vergleiche Figur 1) in Abhängigkeit von einer Durchflusskenngröße DF, einer effektiven Querschnittsfläche $A_{AGR}$ des Abgasrückführventils 13, der Gaskonstante R sowie dem Abgasgegendruck $p_{AGR}$ und der Temperatur $T_{AGR}$ vor dem Abgasrückführventil 13:

$$(8) \quad dm_{AGR} = A_{AGR} \cdot p_{AGR} \cdot \frac{2}{\sqrt{R \cdot T_{AGR}}} \cdot DF$$

Für die Berechnung des Abgasrückführmassenstroms $dm_{AGR}$ muss eine Fallunterscheidung durchgeführt werden in Abhängigkeit davon, ob der Abgasrückführmassenstrom von dem Abgastrakt in den Ansaugtrakt ($dm_{AGR} > 0$) oder von dem Ansaugtrakt in den Abgastrakt ($dm_{AGR} < 0$) strömt. Die obige Formel (8) gilt somit nur den Fall $dm_{AGR} \geq 0$, während für den Fall $dm_{AGR} < 0$ der Abgasrückführmassenstrom $dm_{AGR}$ wie folgt ermittelt werden kann:

$$(9) \quad dm_{AGR} = A_{AGR} \cdot p_{sr} \cdot \frac{2}{\sqrt{R \cdot T_{sr}}} \cdot DF$$

Die in den Formeln (8) und (9) enthaltenen Wurzelfunktionen können vorzugsweise durch ein quadratisches Polynom angenähert werden, welches beispielsweise in dem hier interessierenden Temperaturbereich von 200-1200K gültig ist. Um die Trägheit der Abgasrückführung in dem Gesamtsystem zu berücksichtigen, wird der Abgasrückführmassenstrom in dem Abgasrückführmassenstrommodell des Steuergeräts 4 vorzugsweise durch ein PT1-Glied verzögert.

Wie bereits erwähnt worden ist, wird mit Hilfe dieses Modells nicht nur der Abgasrückführmassenstrom $dm_{AGR}$, sondern auch die Temperatur $T_{AGR}$ der zurückgeführten Abgase vor der Mischstelle mit der Frischluft berechnet. Die Temperatur $T_{AGR}$ ist insbesondere zur Berechnung des Abgasrückführmassenstroms $dm_{AGR}$ erforderlich (vgl. Formel (8)). Für die Berechnung der Temperatur $T_{AGR}$ der zurückgeführten Abgase vor dem Abgasrückführventil muss ebenfalls eine Unterscheidung zwischen Vorwärtsströmung und Rückwärtsströmung vorgenommen werden. Dabei gilt:

$$(10) \quad T_{AGR} = T_{AG} - RF \cdot (T_{AG} - T_K) \text{ für } dm_{AGR} \geq 0$$

$$(11) \quad T_{AGR} = T_{sr} \text{ für } dm_{AGR} < 0$$

Im Fall der Vorwärtsströmung ($dm_{AGR} \geq 0$) werden heiße Abgase durch die Abgasrückführleitung geführt, während im Fall der Rückwärtsströmung Frischluft durch die Abgasrückführleitung strömt. Die Abkühlung der heißen Gase über der Abgasrückführleitung wird gemäß Formel (10) dadurch nachgebildet, dass von der Abgastemperatur $T_{AG}$ vor der Turbine 2 $RF \cdot (T_{AG} - T_K)$ subtrahiert wird, wobei RF einen Rohrfaktor der Abgasrückführleitung bezeichnet, mit dessen Hilfe die Abkühlung an die Art der Abgasrückführstrecke angepasst werden kann (z.B. Unterscheidung zwischen gekühlter und ungekühlter Abgasrückführung), während $T_K$ der Kühlwassertemperatur des Verbrennungsmotors 1 entspricht und somit ein Maß für die Abkühlung der Abgastemperatur $T_{AG}$ ist. Die Abgastemperatur $T_{AG}$ vor der Turbine 2 wird von einem nachfolgend noch näher erläuterten weiteren physikalisch basierten Modell generiert.

Die gemäß den Formel (8) und (9) benötigte Durchflusskenngröße DF ist eine Funktion des Druckverhältnisses über die von diesem Abgasrückführmassenstrommodell nachgebildete Drosselstelle, d.h. über dem Abgasrückführventil. Da die Durchflusskenngröße DF auch in anderen Modellen des Gesamtsystems verwendet wird, ist sie vorzugsweise ebenfalls als eine eigene Methode realisiert, die von den anderen Modellen aufgerufen werden kann. Die entsprechende Methode wertet den Druck vor der entsprechenden Drosselstelle und den Druck hinter der entsprechenden Drosselstelle aus und liefert davon abhängig einen bestimmten Wert für die Durchflusskenngröße DF zurück. Dabei muss zwischen einem sogenannten überkritischen Strömungsfall, bei dem das Druckverhältnis über der Drosselstelle kleiner als ein vorgegebenes kritisches Druckverhältnis ist, und einem unterkritischen Fall, bei dem das Druckverhältnis größer als das kritische Druckverhältnis ist, unterschieden werden.

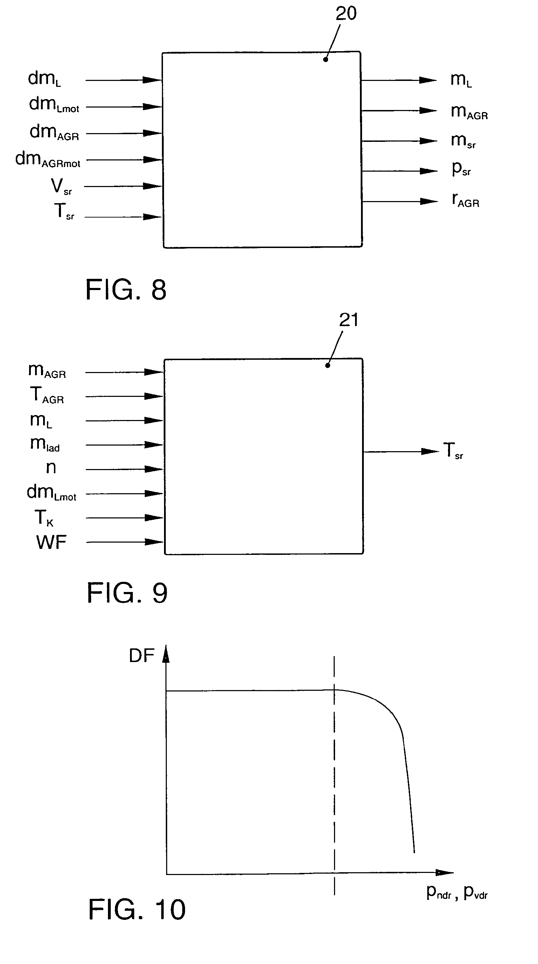

Der Verlauf der Durchflusskenngröße DF in Abhängigkeit von dem Druckverhältnis zwischen dem Druck $p_{vdr}$ vor der Drosselstelle und dem Druck $p_{ndr}$ nach der Drosselstelle ist in Figur 10 dargestellt. Aus Figur 10 ist ersichtlich, dass im überkritischen Strömungsfall, welcher gemäß Figur 10 von dem unterkritischen Strömungsfall durch eine gestrichelte Linie getrennt ist, die Durchflusskenngröße DF einem bestimmten Maximalwert gleichgesetzt werden kann. Im unterkritischen Fall wird hingegen die Durchflusskenngröße DF gemäß einer Ersatzfunktion berechnet, welche dem in Figur 10 gezeigten in Abhängigkeit von dem Druckverhältnis kontinuierlich abnehmenden Kurvenverlauf für den unterkritischen Fall entspricht. Dabei wird insbesondere zwischen dem Fall der Vorwärtsströmung und dem Fall der Rückwärtsströmung unterschieden. Die Vorwärtsströmung kann von der Rückwärtsströmung beispielsweise durch Setzen eines entsprechenden Bits in einer entsprechenden Variable unterschieden werden.

Die Bestimmung der effektiven Querschnittsfläche $A_{AGR}$ des Abgasrückführventils geschieht mit Hilfe eines durch einen Korrekturfaktor AKORR korrigierten Kennlinienfelds, wobei als Eingangsgröße dieses Kennlinienfelds in Abhängigkeit von dem augenblicklichen Wert eines entsprechenden Bits wahlweise der gemessene Ventilhub oder das Ansteuer-Tastverhältnis dieses Ventils durch das Steuergerät 4 verwendet wird. Welche dieser Eingangsgrößen für die Ermittlung der effektiven Querschnittsfläche des Abgasrückführventils verwendet wird, hängt von der Art des jeweils verwendeten Stellers ab. Bei einem elektrischer Abgasrückführsteller wird das Ansteuer-Tastverhältnis des Steuergeräts 4 als Eingangsgröße für das entsprechende Kennfeld verwendet, während bei einem Steller mit Laderückmeldung der gemessene Ventilhub als Eingangsgröße verwendet wird. Um die Trägheit des Abgasrückführventils bei einer Verstellung zu berücksichtigen, kann die auf diese Weise berechnete effektive Querschnittsfläche des Abgasrückführventils durch ein PT1-Glied verzögert werden.

Durch den zuvor erwähnten Korrekturfaktor AKORR kann ähnlich wie bei dem zuvor beschriebenen Motorfüllungsmodell die berechnete Ventilquerschnittsfläche des Abgasrückführventils in Abhängigkeit von einem Vergleich zwischen dem gemessenen und dem modellierten Ladedruck in den stationären Betriebsphasen des Verbrennungsmotors 1 korrigiert werden. Auch diesbezüglich kann hierzu ein Integrator verwendet werden, welcher die Differenz zwischen dem gemessenen und modellierten Ladedruck auswertet und als Ausgangswert den Korrekturwert AKORR für die berechnete Querschnittsfläche des Abgasrückführventils liefert.

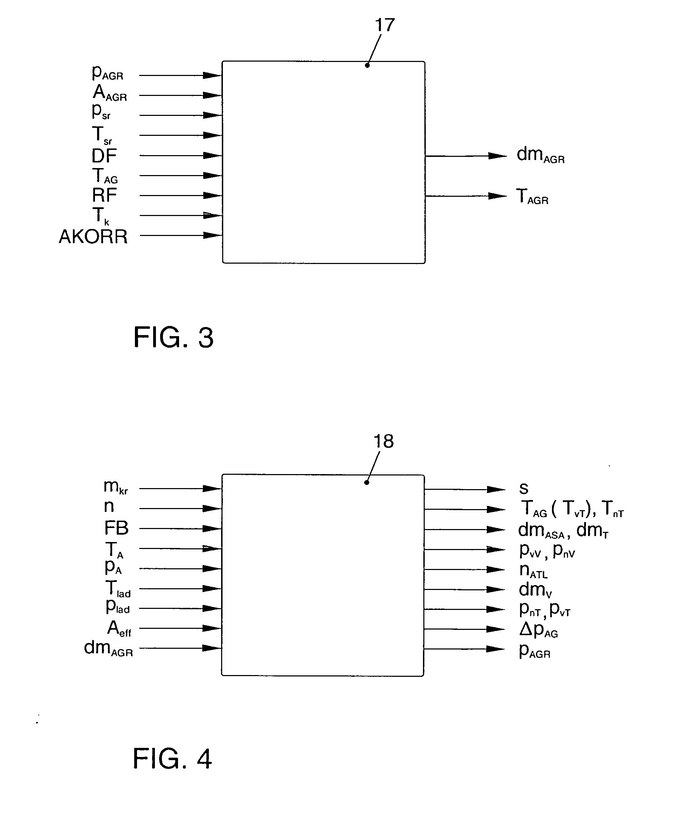

In Figur 3 ist das zuvor beschriebene Abgasrückführmassenstrommodell 17 mit seinen Eingangs- und Ausgangsgrößen schematisch dargestellt.

Mit Hilfe eines weiteren Modells, welches nachfolgend auch als Turbinenmodell bezeichnet wird, kann das Verhalten des Abgastrakts vor und nach der in Figur 1 gezeigten Turbine 2 nachgebildet werden. Als wichtigste Ausgangsgröße wird dabei von dem Turbinenmodell der Abgasgegendruck vor der Turbine 2 ermittelt. Darüber hinaus werden weiteren Ausgangs- und Zwischengrößen berechnet, auf die nachfolgend näher eingegangen werden soll.

Innerhalb des Turbinenmodells ist der Schaufelweg s der Turbine 2 eine wichtige Größe zur Bestimmung des Abgasgegendrucks vor der Turbine 2. Der Schaufelweg s kann entweder direkt in Kombination mit einer entsprechenden Analog/Digital-Umsetzung gemessen oder über das Ansteuer-Tastverhältnis des in Figur 1 gezeigten Stellglieds 15 ermittelt werden. Die Bestimmung des unverzögerten Schaufelwegs s über dieses Ansteuer-Tastverhältnis kann durch Zugriff auf eine entsprechende Kennlinie erfolgen, welche jeden Wert des Ansteuer-Tastverhältnisses einem entsprechenden Wert des Schaufelwegs s der Turbine 2 zuordnet. Die Dynamik der Schaufelbewegung der Turbine 2 wird vorzugsweise durch ein PT1-Glied berücksichtigt, um das Zeitverhalten des Schaufelwegs s möglichst gut nachbilden zu können.

Die Abgastemperatur $T_{AG}$ vor der Turbine 2 wird in Abhängigkeit von der Einspritzmenge $m_{kr}$ und der Motordrehzahl $n_0$ (normierte Motordrehzahl) bzw. n (nichtnormierte Motordrehzahl) über einen Differenztemperaturansatz zwischen der Abgastemperatur vor der Turbine 2 und der Saugrohrtemperatur, d.h. der Temperatur in dem Ansaugtrakt, bestimmt. Dabei wird die Differenztemperatur, d.h. die Temperaturerhöhung infolge der Verbrennung vor der Turbine 2, über ein Kennfeld in Abhängigkeit von der Motordrehzahl und der Einspritzmenge bzw. eingespritzten Kraftstoffmasse ermittelt. Der auf diese Weise gewonnene Differenztemperaturwert $\triangle T1_{ASA}$ kann in Abhängigkeit von dem Förderbeginn, d.h. dem Beginn der Kraftstoffeinspritzung in den entsprechenden Brennraum des Verbrennungsmotors 1, multiplikativ korrigiert werden, um einen endgültigen Wert für die Differenztemperatur $\Delta T_{ASA}$, d.h. für die Temperaturerhöhung durch die Verbrennung vor der Turbine 2, zu erhalten:

$$(12) \; \Delta T_{ASA} = \Delta T1_{ASA} \cdot \Delta T2_{ASA}$$

Alternativ kann auch eine additive Korrektur erfolgen:

$$(13) \; \Delta T_{ASA} = \Delta T1_{ASA} + \Delta T2_{ASA}$$

Der Differenztemperatur-Korrekturwert $\Delta T2_{ASA}$ wird dabei mit Hilfe einer weiteren Kennlinie in Abhängigkeit von dem Förderbeginn FB bestimmt. Die Umschaltung zwischen den beiden zuvor genannten Alternativen (vergleiche Formeln (12) und (13)) kann in Abhängigkeit von der Stellung eines entsprechenden Schalters bzw. eines entsprechenden Bits erfolgen.

Der ausgestossene Abgasmassenstrom $dm_{ASA}$ des Verbrennungsmotors 1 wird aus dem von dem Verbrennungsmotor 1 bzw. dem entsprechenden Brennraum angesaugten Gasmassenstrom $dm_{ges}$ sowie dem eingespritzten Kraftstoffmassenstrom $dm_{kr}$ bzw. einem von der eingespritzten Kraftstoffmasse $m_{kr}$ und der Motordrehzal n abhängigen Anteil berechnet:

$$(14) \; dm_{ASA} = dm_{ges} + dm_{kr} = dm_{ges} + f(n, m_{kr})$$

Der Gasmassenstrom $dm_T$ durch die Turbine 2 kann aus dem von dem Verbrennungsmotor 1 ausgestossenen Abgasmassenstrom $dm_{ASA}$ und dem Abgasrückführmassenstrom $dm_{AGR}$ ermittelt werden:

$$(15) \; dm_T = dm_{ASA} - dm_{AGR}$$

Des Weiteren kann eine auf den Verdichter 7 bezogene Abgasturbolader- bzw. Verdichterdrehzahl $n_V$ mit Hilfe eines Kennfelds in Abhängigkeit von dem Frischluftmassenstrom $dm_V$ durch den Verdichter 7 und dem Druckverhältnis über dem Verdichter 7 bestimmt werden. Zur Berechnung des Druckverhältnisses über dem Verdichter 7 wird der Druck hinter dem Verdichter 7 und der Druck vor dem Verdichter 7 bestimmt, um anschließend daraus das Druckverhältnis über dem Verdichter 7 zu berechnen. Der Druck $p_{vV}$ vor dem Verdichter 7 bzw. $p_{nV}$ nach dem Verdichter 7 kann wie folgt aus dem Atmosphärendruck $p_A$, dem von dem Heißfilm-Luftmassensensor gemessenen und bei dem in Figur 1 gezeigten Modell eingangsseitig zugeführten Frischluftmassenstrom $dm_{HFM}$, der Atmosphärentemperatur $T_A$, dem Ladedruck $p_{lad}$ und der Ladetemperatur $T_{lad}$ ermittelt werden:

$$p_{vV} = p_A - \frac{dm_{HFM}^2 \cdot T_A}{p_A} \cdot VFAK1$$

$$(16)$$

$$p_{nV} = p_{lad} - \frac{dm_{HFM}^2 \cdot T_{lad}}{p_{lad}} \cdot VFAK2$$

Dabei wird gemäss Gleichung (16) ein Verlustfaktor VFAK1 bzw. VFAK2 verwendet, um jeweils den Druckverlust vor bzw. nach dem Verdichter 7 zu berücksichtigen, welche jeweils durch Quotientenbildung aus der Gaskonstante R und dem Quadrat einer entsprechenden Ersatzfläche $A^2_{VV}$ bzw. $A^2_{nV}$ ermittelt werden.

Der Frischluftmassenstrom $dm_V$ durch den Verdichter 7 ist folgendermaßen definiert:

$$(17) \quad dm_V = dm_{HFM} \cdot \frac{K}{p_{vv}} \cdot \sqrt{\frac{T_A}{T_{0v}}}$$

Dabei bezeichnet K eine Konstante und $T_{0V}$ eine Bezugs- oder Referenztemperatur des Verdichters 7, welche bei der Messung der Verdichterkennfelder verwendet wird. Die Abgasturboladerdrehzahl $n_{ATL}$ berechnet sich aus der auf den Verdichter 7 bezogenen Abgasturboladerdrehzahl $n_V$ in Abhängigkeit von der Umgebungs- bzw. Atmosphärentemperatur $T_A$ und der Bezugstemperatur $T_{0V}$ des Verdichters 7 wie folgt:

$$(18) \quad n_{ATL} = n_V \cdot \sqrt{\frac{T_A}{T_{0V}}}$$

Die in den Formeln (17) und (18) enthaltene Wurzelfunktion kann aus Rechenzeitgründen durch ein quadratisches Polynom in Abhängigkeit von $T_A/T_{0V}$ berechnet werden.

Als weitere Ausgangsgröße wird mit Hilfe des Turbinenmodells die Temperatur $T_{nT}$ im Abgastrakt hinter der Turbine 2 berechnet. Dies erfolgt abhängig von der Temperatur $T_{vT}$ der Turbine 2 durch Nachbildung der Temperaturabsenkung über der Turbine 2, wobei zudem der Turbinenwirkungsgrad $\eta_T$ wie folgt berücksichtigt wird:

$$(19) \quad T_{nT} = T_{vT} \cdot (1 - \Delta T_T \cdot \eta_T)$$

Die Temperaturänderung $\Delta T_T$ über der Turbine 2 wird mit Hilfe einer entsprechenden Kennlinie in Abhängigkeit von dem Druckverhältnis über der Turbine 2, d.h. dem Verhältnis zwischen dem Druck $p_{vT}$ vor der Turbine und dem Druck $p_{nT}$ nach der Turbine, ermittelt, während der Wirkungsgrad $\eta_T$ der Turbine 2 mit Hilfe einer entsprechenden Kennlinie in Abhängigkeit von dem Schaufelweg s der Turbine 2 appliziert wird. Die Temperatur $T_{vT}$ vor der Turbine 2 entspricht dem bereits zuvor ermittelten Wert $T_{AG}$. d.h. der Abgastemperatur vor der Turbine 2. Ebenso entspricht der Druck $p_{vT}$ vor der Turbine 2 dem modellierten Abgasgegendruck $p_{AG}$ vor der Turbine 2.

Als weitere Größe wird der Abgasgegendruck $p_{nT}$ hinter der Turbine berechnet, wobei hierzu eine Druckdifferenz zwischen dem Abgastrakt hinter der Turbine 2 und dem Atmosphärendruck $p_A$ ermittelt wird. Dies kann ebenfalls über eine entsprechende Kennlinie erfolgen, wobei für diese Kennlinie als Eingangsgröße der Gasmassenstrom $dm_T$ durch die Turbine 2 verwendet wird, welcher multiplikativ wie folgt durch die Wurzel aus der Abgastemperatur $T_{nT}$ nach der Turbine 2 korrigiert wird:

$$(20) \quad dm_T^* = dm_T \cdot \sqrt{T_{nT}}$$

In Abhängigkeit von dem korrigierten Gasmassenstrom $dm^*_T$ durch die Turbine 2 kann die Druckdifferenz $\triangle p_{nT}$ zwischen dem Abgastrakt hinter der Turbine 2 und dem Atmosphärendruck $p_A$ mit Hilfe einer quadratischen Gleichung in Abhängigkeit von $\triangle p_{nT}$ ermittelt werden, wobei die Koeffizienten dieser quadratischen Gleichung applizierbar sind. Der Abgasgegendruck $p_{nT}$ nach der Turbine 2 (in Bar) ergibt sich für den Fall, dass kein Abgasgegendrucksensor im Abgastrakt nach der Turbine 2 vorhanden ist, wie folgt aus der Addition des Atmosphärendrucks $p_A$ und der berechneten Druckdifferenz $\Delta pn_T$:

$$(21)\ p_{nT} = (\Delta p_{nT} + p_A)/10^5$$

Ist hingegen ein Abgasgegendrucksensor im Abgastrakt bzw. ein Differenzdrucksensor hinter der Turbine 2 vorgesehen, so wird die von diesem Abgasgegendrucksensor gemessene Druckdifferenz $\Delta p_{AG}$ zusätzlich zu dem modulierten Abgasgegendruck hinter der Turbine 2 addiert:

$$(22)\ p_{nT} = (\Delta p_{nT} + p_A + \Delta p_{AG})/10^5$$

Der Abgasgegendruck $p_{vT}$ vor der Turbine 2 kann aus dem Abgasgegendruck $p_{nT}$ nach der Turbine 2 mit Hilfe eines Polynoms mit 13 Koeffizienten in Abhängigkeit von den Eingangsgrößen Turbinemassenstrom $dm_T$, Schaufelweg s und Abgasturboladerdrehzahl $n_{ATL}$ berechnet werden, wobei die drei zuletzt genannten Größen bevorzugt mit Hilfe entsprechender applizierbarer Parameter normiert verwendet werden. Eine beispielhafte und bevorzugten Berechnungsvorschrift zur Ermittlung des Abgasgegendrucks $p_{vT}$ vor der Turbine 2 ist nachfolgend angegeben, wobei jedoch im Prinzip beliebige Kombinationen der Eingangsgrößen möglich sind:

$$(23)\ p_{vT} = Z \cdot p_{nT}$$

$$
\begin{aligned}
Z \ =\ & b_0 + b_1 \cdot dm_T + b_2 \cdot (s - 0{,}5) \\
& + b_3 \cdot s^2 + b_4 \cdot (n_{ATL} - 0{,}5)^2 \\
& + b_5 \cdot (dm_T + 0{,}5) \cdot (s + 0{,}5) \\
& + b_6 \cdot (dm_T - 0{,}5) \cdot s^2 \\
& + b_7 \cdot (s - 1) \cdot (n_{ATL} - 0{,}5)^2 \\
& + b_8 \cdot (s - 1) \cdot (s - 0{,}5)^2 \\
& + b_9 \cdot (dm_T - 1)^2 \\
& + b_{10} \cdot (dm_T - 1) \cdot (dm_T + 0{,}5)^2 \cdot dm_T \\
& + b_{11} \cdot [(dm_T - 1) \cdot (s - 0{,}5)^3 - 0{,}5] \cdot b_{12} \\
& + b_{13}
\end{aligned}
$$

Die Koeffizienten $b_0$ - $b_{13}$ sind vorzugsweise variabel.

Als weitere Ausgangsgröße wird der Abgasgegendruck $p_{AGR}$ vor dem in Figur 1 gezeigten Abgasrückführventil 13 berechnet. Er ergibt sich wie folgt in Abhängigkeit aus dem Abgasgegendruck vor der Turbine $p_{vT}$, dem Abgasrückführmassenstrom $dm_{AGR}$, der Abgastemperatur vor der Turbine $T_{vT}$ und einer Konstanten PF:

$$(24)\ p_{AGR} = p_{vT} - \left( dm_{AGR}^2 \cdot T_{vT} \cdot \frac{PF}{p_{vT}} \right)$$

In der Formel (24) werden der Abgasgegendruck $p_{vT}$ vor der Turbine und die Abgastemperatur $T_{vT}$ vor der Turbine vorzugsweise mit Hilfe eines PT1-Glieds verzögert bzw. gefiltert verwendet.

Bei diesem Ansatz wird ein Druckabfall in der Abgasrückführleitung vor und hinter dem Abgasrückführventil berücksichtigt. Der Druckabfall ist über die effektive Querschnittsfläche $A_{eff}$ der Abgasrückführleitung (ohne Abgasrückführventil) applizierbar. Während einer Initialisierungsphase des Steuergeräts 4 kann hieraus der Parameter PF wie folgt berechnet werden, wobei R die Gaskonstante bezeichnet:

$$(25) \quad PF = \frac{R}{A_{eff}^2}$$

Das zuvor ausführlich erläuterte Turbinenmodell 18 ist hinsichtlich seiner Eingangs- und Ausgangsgrößen schematisch in Figur 4 dargestellt.

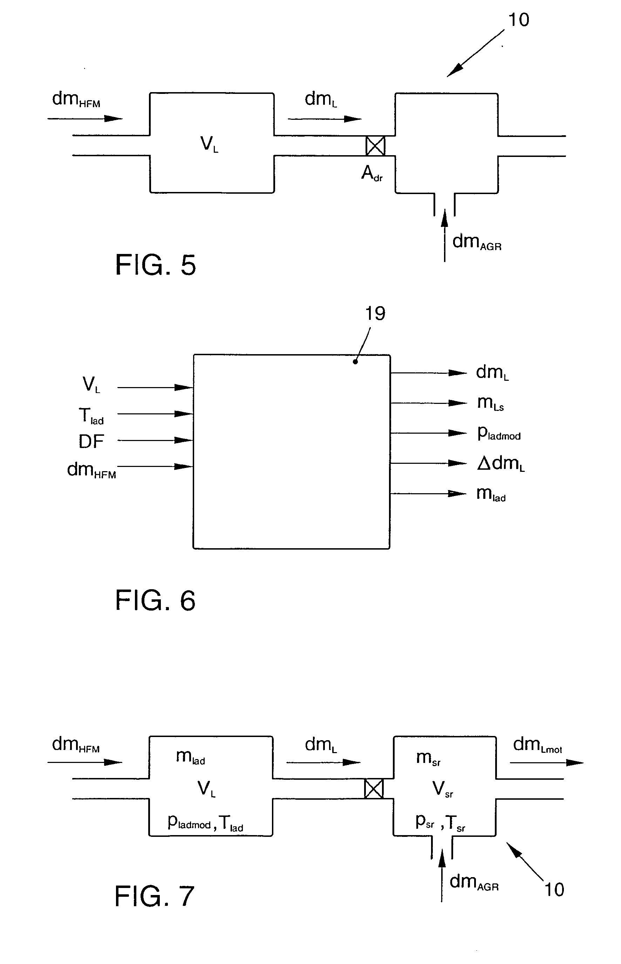

Ein weiteres physikalisch basiertes Modell dient zur Nachbildung des Speicherverhaltens des Ansaugtrakts zwischen dem in Figur 1 gezeigten Verdichter 7 und der ebenfalls in Figur 1 gezeigten Abgasrückführung-Frischluftmischstelle 10. Dieses Modell wird nachfolgend auch als Frischluftmassenstrommodell bezeichnet und besteht aus der Nachbildung eines Speichervolumens $V_L$ für die angesaugte Frischluft und einer anschließenden Drosselstelle mit der effektiven Querschnittsfläche $A_{dr}$, wie es in Figur 5 gezeigt ist.

Als Ausgangsgrößen dieses Frischluftmassenstrommodells werden insbesondere der Frischluftmassenstrom $dm_L$ durch die zuvor genannte Drosselstelle in den Einlasskrümmer, d.h. in den Motoreinlass, die gespeicherte Frischluftmasse $m_{Ls}$ in dem Speichervolumen zwischen dem Verdichter 7 und der Abgasrückführung-Frischluftmischstelle 10 sowie der modellierte Ladedruck pladmod bestimmt. Darüber hinaus wird die Differenz $\Delta dm_L$ zwischen dem gemessenen Frischluftmassenstrom $dm_{HFM}$ des Heißfilm-Luftmassensensors und den in den Verbrennungsmotor 1 strömenden Frischluftmassenstrom $dm_L$ ermittelt.

Der modellierte Ladedruck pladmod kann wie folgt aus der Frischluftmasse $m_{lad}$ im Volumen zwischen dem Verdichter 7 und dem Einlasskrümmer bzw. dem Motoreinlass und einer gemessenen Ladetemperatur $T_{lad}$ der Frischluft berechnet werden:

$$(26) \quad p_{lad\,mod} = m_{lad} \cdot \frac{R}{V_L} \cdot T_{lad}$$

Die Ladelufttemperatur $T_{lad}$ wird dabei vorzugsweise PT1-gefiltert verwendet.

Der Frischluftmassenstrom $dm_L$ in den Einlasskrümmer kann wie folgt in Abhängigkeit von der PT1-gefilterten, gemessenen Ladelufttemperatur $T_{lad}$, dem modellierten Ladedruck $p_{ladmod}$, der Gaskonstante R, dem modellierten Saugrohrdruck $p_{sr}$, d.h. dem Druck des Ansauggases vor den Einlassventilen des Verbrennungsmotors 1, und der effektiven Querschnittsfläche $A_{dr}$ der Drosselklappe vor der Abgasrückführung-Frischluftmischstelle ermittelt werden:

$$(27) \quad dm_L = A_{dr} \cdot p_{lad\,mod} \cdot \frac{2}{\sqrt{R \cdot T_{lad}}} \cdot DF$$

Auch der auf diese Weise ermittelte Frischluftmassenstrom $dm_L$ kann mit Hilfe eines entsprechenden PT1-Glieds gefiltert werden, um die Trägheit des Frischluftmassenstroms nachzubilden. Die bei der PT1-Filterung verwendeten Zeitkonstanten, welche die Trägheit des Frischluftmassenstroms für eine positive bzw. negative Veränderung nachbilden, sollten möglichst klein gewählt werden (z.B. < 20 ms). Die Wurzel in der Formel (27) kann wiederum durch ein Polynom dritter Ordnung angenähert werden. Wie bereits anhand des zuvor erläuterten Motorfüllungsmodells beschrieben worden ist, wird die Durchflusskenngröße DF erneut durch einen entsprechenden Funktionsaufruf ermittelt.

Die effektive Querschnittsfläche $A_{dr}$ der Drosselstelle ist eine Funktion des ebenfalls durch ein PT1-Glieds verzögerten Ansteuer-Tastverhältnisses des Steuergeräts 4, wobei in diesem Fall die Zeitkonstanten des PT1-Glieds so gewählt werden sollten, dass sie weitgehend den Zeitkonstanten für das Öffnen und Schließen der Drosselklappe entsprechen.

Aus der Massenstrombilanz des Volumens zwischen dem Verdichter 7 und dem Einlasskrümmer bzw. Motoreinlass des Verbrennungsmotors 1 ergibt sich die Frischluftmasse $m_{lad}$ aus der Integration des Differenzmassenstroms $\Delta dm_L$ zwischen dem einströmenden, gemessenen Frischluftmassenstrom $dm_{HFM}$ und dem ausströmenden, modellierten Frischluftmassenstrom $dm_L$ in den Einlasskrümmer:

$$(28) \quad m_{lad} = \int_{t}^{t+T_0} \Delta dm_L d\tau$$

$$\Delta dm_L = dm_{HFM} - dm_L$$

Dabei bezeichnet $T_0$ das jeweils gewählte zeitliche Integrationsintervall. Die auf diese Weise gewonnene Frischluftmasse $m_{lad}$ zwischen dem Verdichter und dem Einlasskrümmer des Verbrennungsmotors wird vorzugsweise über den entsprechenden Integratorausgang auf einen minimalen Wert und einen maximalen Wert begrenzt. Die Integratorzeitkonstante ist vorzugsweise mit Hilfe eines entsprechenden Parameters variabel einstellbar.

Die auf diese Weise ermittelte Frischluftmasse $m_{lad}$ bildet - wie zuvor beschrieben worden ist - durch Anwendung des idealen Gasgesetzes die Grundlage zur Bestimmung des modellierten Ladedrucks $p_{ladmod}$ gemäß Formel (26).

Das zuvor ausführlich erläuterte Frischluftmassenstrommodell 19 ist hinsichtlich seiner Eingangs- und Ausgangsgrößen schematisch in Figur 6 dargestellt.

Mit Hilfe eines weiteren Modells wird das Verhalten des Einlasskrümmers, d.h. der Verbindung zwischen der Abgasrückführung/Frischluft-Mischstelle und den Motoreinlassventilen, nachgebildet, wobei der Einlasskrümmer ebenfalls durch einen Behälter mit einem Volumen $V_{sr}$ modelliert wird. Dieser Behälter wird nachfolgend als Saugrohr bezeichnet, so dass das entsprechende Modell als Saugrohrmodell bezeichnet werden kann. Eine schematische Darstellung des Ansaugtrakt-Saugrohrs ist aufbauend auf der in Figur 5 gezeigten schematischen Darstellung des Ansaugtrakts in Figur 7 gezeigt.

Im Saugrohr vermischen sich der zufließende Abgasrückführungmassenstrom $dm_{AGR}$ und der Frischluftmassenstrom $dm_L$ zu einem Frischluft/Abgasgemisch, aus dem der Verbrennungsmotor 1 seine Füllung bezieht. Die Abgasrückführmasse und die Frischluftmasse in dem Saugrohr können aus den Massenstrombilanzen für die Frischluft und die rückgeführte Abgasmasse durch Integration berechnet werden.

Die Frischluftmasse $m_L$ ergibt sich aus der Integration der Differenz zwischen dem zu- und abfließenden Frischluftmassenstrom in das Saugrohr:

$$(29) \quad \begin{array}{l} m_L = \int_{t}^{t+T_0} (dm_L - dm_{Lmot})\, d\tau \quad \text{für } dm_{AGR} \geq 0 \\[2em] m_L = \int_{t}^{t+T_0} (dm_L - dm_{Lmot} + dm_{AGR}) \quad \text{für } dm_{AGR} < 0 \end{array}$$

Wie aus Formel (29) ersichtlich ist, wird für die Berechnung der Frischluftmasse $m_L$ eine Fallunterscheidung durchgeführt in Abhängigkeit davon, ob über die Abgasrückführleitung Abgas in das Saugrohr ($dm_{AGR} \geq 0$) oder Frischluft aus dem Saugrohr in den Abgastrakt ($dm_{AGR} < 0$) fließt. Innerhalb des Saugrohrmodells werden die Integratorausgänge und damit die berechnete Frischluftmasse $m_L$ vorzugsweise auf einen minimalen Wert und auf einen maximalen Wert begrenzt.

Die Berechnung der zurückgeführten Abgasmasse $m_{AGR}$ im Saugrohr erfolgt analog zur Berechnung der Frischluftmasse. Durch Integration der Differenz aus dem zufließenden Abgasrückführmassenstrom $dm_{AGR}$ und dem in den Motor abfließenden Abgasrückführmassenstrom $dm_{AGRmot}$ ergibt sich die Masse $m_{AGR}$ der zurückgeführten Abgase im Saugrohr:

$$(30) \quad \begin{array}{l} m_{AGR} = \int_{t}^{t+T_0} (dm_{AGR} - dm_{AGRmot})\, d\tau \quad \text{für } dm_{AGR} \geq 0 \\[2em] m_{AGR} = \int_{t}^{t+T_0} - dm_{AGRmot}\, d\tau \quad \text{für } dm_{AGR} < 0 \text{ und } m_{AGR} > 0 \end{array}$$

Im Falle eines negativen Abgasrückführmassenstroms wird vereinfachend angenommen, dass nur die Frischluft über die Abgasrückführleitung in den Abgastrakt strömt, d.h. es wird angenommen: $dm_{AGR} = 0$. Die Masse der zurückgeführten Abgase wird wiederum über den Integratorausgang auf einen mimalen Wert und einen maximalen Wert begrenzt.

Die Zeitkonstanten der für die Berechnung der Luftmasse und der zurückgeführten Abgasmasse in dem Saugrohr verwendeten Integratoren sowie deren Gültigkeitsbereiche sind vorzugsweise über entsprechende Parameter veränderbar.

Die Gesamtgasmasse $m_{sr}$ ergibt sich dann aus der Addition der Frischluftmasse $m_L$ und der Abgasmasse $m_{AGR}$ in dem Saugrohr. In einer Initialisierungsphase des Steuergeräts 4 kann jeweils für die Frischluftmasse $m_L$ und die Abgasmasse $m_{AGR}$ ein Anfangswert in Abhängigkeit von einer vorgebbaren Temperatur und einem vorgebbaren Druck berechnet werden.

Der Druck $P_{sr}$ in dem Saugrohr ergibt sich in Abhängigkeit von dem Volumen $V_{sr}$ aus dem idealen Gasgesetz:

$$(31) \quad p_{sr} = \frac{m_{sr} \cdot R \cdot T_{sr}}{V_{sr}}$$

Als eine weitere Ausgangsgröße des Saugrohrmodells wird schließlich die Abgasrückführrate $r_{AGR}$ aus den Massenanteilen im Saugrohr wie folgt berechnet:

$$(32) \quad r_{AGR} = \frac{m_{AGR}}{m_{sr}}$$

Das zuvor detailliert erläuterte Saugrohrmodell 20 ist hinsichtlich seiner Eingangs- und Ausgangsgrößen schematisch in Figur 8 dargestellt.

In einem weiteren physikalisch basierten Modell, welches in dem Steuergerät 4 realisiert ist, wird die Saugrohrtemperatur $T_{sr}$ des Frischluft/Abgasgemisches in dem Saugrohr bestimmt.

Die Saugrohrtemperatur $T_{sr}$ wird dabei in Abhängigkeit von der Abgasrückführmasse $m_{AGR}$ in dem Saugrohr und der Temperatur $T_{AGR}$ des Abgasrückführmassenstroms sowie der Frischluftmasse $m_L$ in dem Saugrohr und der (PT1-verzögerten) Temperatur $T_{lad}$ des einströmenden Frischluftmassenstroms bestimmt:

$$(33) \quad T_{sr} = \frac{T_{AGR} \cdot m_{AGR} + T_{lad} \cdot m_L}{m_{AGR} + m_L} \quad für \; m_{AGR} + m_L \neq 0$$

Für den Fall, dass der Nenner der Formel (33), d.h. die Gesamtmasse in dem Saugrohr, dem Wert 0 entspricht, wird die Saugrohrtemperatur $T_{sr}$ auf den Wert der Temperatur $T_{lad}$ des einströmenden Frischluftmassenstroms gesetzt:

$$(34) \quad T_{sr} = T_{lad} \; für \; m_{AGR} + m_L = 0$$

Die Wandwärmeübergänge in dem Saugrohr führen zu einer Abkühlung bzw. Erwärmung des Frischluft/Abgasgemisches. Diese Temperaturänderung kann durch Addition eines zusätzlichen Terms $\Delta T_{sr}$ berücksichtigt werden.

$$(35) \quad T_{sr} = T_{sr} + \Delta T_{sr}$$

Die Temperaturänderung $\Delta T_{sr}$ ist abhängig von der Wandtemperatur $T_w$ des Saugrohrs sowie der Temperatur $T_{sr}$ des Frischluft/Abgasgemisches im Saugrohr. Der Erwärmungs- bzw. Abkühlungseffekt durch die Wandwärmeübergänge ist zudem abhängig von dem aktuellen Motorbetriebspunkt. Dies kann mit Hilfe eines Kennfelds bei der Berechnung der Temperaturänderung $\Delta T_{sr}$ berücksichtigt werden, wobei in diesem Kennfeld ein Faktor in Abhängigkeit von der Drehzahl n und dem in den Brennraum des Verbrennungsmotors 1 angesaugten Frischluftmassenstrom $dm_{Lmot}$ angepasst werden kann:

$$(36)\ \Delta T_{sr} = (T_w - T_{sr}) \cdot f(n, dm_{Lmot})$$

Aus der Formel (36) ist ersichtlich, dass die Temperaturänderung $\Delta T_{sr}$ aus einem Differenzwert der Wandtemperatur $T_W$ des Saugrohrs und der Temperatur $T_{sr}$ des Frischfuft/Abgasgemisches in dem Saugrohr berechnet wird, wobei dieser Differenzwert mit einem Faktor multipliziert wird, welcher von der Motordrehzahl n und dem angesaugten Frischluftmassenstrom $dm_{Lmot}$ des Verbrennungsmotors 1 abhängig ist. Die Wandtemperatur $T_w$ des Saugrohrs kann aus der PT1-gefilterten Kühlwassertemperatur $T_K$ und einem applizierbaren Wandwärmefaktor WF berechnet werden:

$$(37)\ T_W = T_K \cdot WF$$

Die Ausgangsgröße, d.h. die Saugrohrtemperatur $T_{sr}$, des Saugrohrtemperaturmodells wird wiederum bevorzugt durch ein PT1-Glied zeitlich verzögert bestimmt.

Das zuvor erläuterte Saugrohrtemperaturmodell 21 ist hinsichtlich seiner Eingangs- und Ausgangsgrößen schematisch in Figur 9 dargestellt.

Wie bereits zuvor erläutert worden ist, können weitere physikalisch basierte Modelle bzw. Funktionen oder Methoden vorgesehen sein, welche aus den einzelnen zuvor detailliert beschriebenen Modellen aufgerufen werden können, um bestimmte Größen in Abhängigkeit von jeweils übergebenen Parametern bestimmen zu können. Eine derartige Funktion bzw. Methode kann - wie bereits erläutert worden ist - zur Bestimmung der Durchflusskenngröße DF vorgesehen sein.

Darüber hinaus kann eine Funktion zur Umrechnung bestimmter Größen sowie zur Bereitstellung bestimmter Konstanten und Parameter vorgesehen sein, auf welche die einzelnen Modelle zugreifen können. Zur Verbesserung der Übersichtlichkeit wird in dem Gesamtmodell hauptsächlich mit Größen in SI-Einheiten gerechnet. Daher sind für die einzelnen Teil- oder Untermodelle zum Teil Vorverarbeitungen bzw. Umrechnungen der jeweils verwendeten Größen erforderlich, welche von diesem Funktionsblock wahrgenommen werden können. Dabei können separate Abschnitte bzw. Methoden für die Verarbeitung von drehzahlsynchronen Größen und zeitsynchronen Größen vorgesehen sein. Ein Beispiel für eine derartige Umrechnung ist die Umrechnung der Eingangssignale für Wegmesssysteme. Sollten für die Abgasrückführventil- und Schaufelposition Wegmesssysteme eingesetzt werden, die eine Signalverarbeitung in dem Steuergerät 4 erforderlich machen, müssen jeweils zusätzliche Kennlinien vorgesehen werden, welche die Umrechnung der Spannungssignale in den entsprechenden Weg erlauben. Ein weiteres Beispiel für eine derartige Umrechnung ist die Berücksichtigung der Hysterese und Lose des Schaufelverstellsysteme der Turbine 2. Konstruktionsbedingt besitzt das Schaufelverstellsystem ein Hystereseverhalten, welches durch die Lose zwischen den Führungszapfen des jeweiligen Steuergestänges und den Leitschaufeln auf dem Verstellring der Turbine 2 zurückgeht. Dadurch können sich Totwege bei Richtungsumkehr des Steuergestänges ergeben, in denen keine Schaufelverstellung erfolgt. Um dieses Verhalten zu berücksichtigen, wird vorzugsweise der durch ein Wegsystem ermittelte Schaufelweg einseitig richtungsabhängig verschoben, wobei sich der Totweg über einen entsprechenden Parameter applikativ einstellen lässt.

Eine weitere zentral bereitgestellte Methode bzw. ein weiterer zentral bereitgestellter Funktionsblock kann zur Realisierung der bereits zuvor erläuterten PT1-Filterung verschiedener Größen vorgesehen sein. Zu diesem Zweck ist diese Methode derart realisiert, dass sie mit zwei Zeitkonstanten, welche in Abhängigkeit von der Eingangssignalrichtung (auf- oder absteigend) umgeschaltet werden, aufgerufen wird. Darüber hinaus wird diese Methode neben der Angabe des jeweiligen Eingangssignals vorzugsweise auch mit einem Parameter aufgerufen, welcher das jeweilige Zeitraster beschreibt. Der Rückgabewert dieser Methode bzw. dieses Funktionsblocks ist dann das PT1-gefilterte Eingangssignal.

**BEZUGSZEICHENLISTE**

| | |
|---|---|
| 1 | Verbrennungsmotor |
| 2 | Turbine |
| 3 | Schnittstelle |

| 4 | Steuergerät |
|---|---|
| 5 | Einspritzsystem |
| 6 | Luftfilter |
| 7 | Verdichter |
| 8 | Ladeluftkühler |
| 9 | Ersatzvolumen |
| 10 | Einlasssammler |
| 11 | Abgassammler |
| 12 | Abgasanlage |
| 13 | Ventil |
| 14 | Turboladerwelle |
| 15 | Leitschaufelverstellung der Turbine |
| 16 | Motorfüllungsmodell |
| 17 | Abgasrückführmassenstrommodell |
| 18 | Turbinenmodell |
| 19 | Frischluftmassenstrommodell |
| 20 | Saugrohrmodell |
| 21 | Saugrohrtemperaturmodell |
| $p_{sr}$ | Druck des Frischluft/Abgasgemisches im Saugrohr |
| $T_{sr}$ | Temperatur des Frischluft/Abgasgemisches im Saugrohr |
| $n_0$ | normierte Motordrehzahl |
| $r_{AGR}$ | Abgasrückführrate |
| $a_i$ | Koeffizient |
| $m_{kr}$ | eingespritze Kraftstoffmasse |
| KORR | Korrekturfaktor |
| $m_{ges}$ | angesaugte Gesamtgasmasse im Brennraum des Verbrennungsmotors |
| $dm_{ges}$ | angesaugter Gesamtgasmassenstrom im Brennraum des Verbrennungsmotors |
| $dm_{Lmot}$ | angesaugter Luftmassenstrom im Brennraum des Verbrennungsmotors |
| $m_{Lmot}$ | Frischluftmasse im Brennraum des Verbrennungsmotors |
| $dm_{AGRmot}$ | angesaugter Abgasrückführmassenstrom im Brennraum des Verbrennungsmotors |
| $m_{AGRmot}$ | Abgasmasse im Brennraum des Verbrennungsmotors |
| $R_L$ | Luftverhältnis |
| $P_{AGR}$ | Abgasgegendruck |
| $A_{AGR}$ | Querschnittsfläche des Abgasrückführventils |
| DF | Durchflusskenngröße |
| $T_{AG}$ | Abgastemperatur |
| RF | Rohrfaktor |
| $T_K$ | Kühlwassertemperatur |
| AKORR | Korrekturfaktor |
| $dm_{AGR}$ | Abgasrückführmassenstrom |
| $T_{AGR}$ | Temperatur des Abgasrückführmassenstroms |
| n | Motordrehzahl |
| FB | Förderbeginn |
| $T_A$ | Atmosphärentemperatur |
| $p_A$ | Atmosphärendruck |
| $T_{lad}$ | Ladetemperatur des Frischluftmassenstroms |
| $p_{lad}$ | Ladedruck des Frischluftmassenstroms |
| $A_{eff}$ | effektive Querschnittsfläche der Abgasrückführleitung |
| s | Schaufelweg der Turbine |
| $T_{vT}$ | Abgastemperatur vor der Turbine |
| $T_{nT}$ | Abgastemperatur hinter der Turbine |
| $dm_{ASA}$ | ausgestossener Abgasmassenstrom |
| $dm_T$ | Abgasmassenstrom durch die Turbine |
| $p_{vV}$ | Druck vor dem Verdichter |
| $p_{nV}$ | Druck hinter dem Verdichter |
| $n_{ATL}$ | Abgasturboladerdrehzahl |
| $dm_v$ | Frischluftmassenstrom durch den Verdichter |

| $P_{nT}$ | Druck hinter der Turbine |
| $p_{vT}$ | Druck vor der Turbine |
| $\triangle p_{AG}$ | Druckdifferenz im Abgastrakt |
| $dm_{HFM}$ | von einem Heißfilm-Luftmassensensor gemessener Frischluftmassenstrom |
| $V_L$ | Speichervolumen des Frischluftmassenstroms |
| $A_{dr}$ | Querschnittsfläche einer Drosselstelle |
| $m_{Ls}$ | gespeicherte Frischluftmasse in dem Speichervolumen |
| $P_{ladmod}$ | modellierter Ladedruck |
| $\Delta dm_L$ | Differenz zwischen dem gemessenen Frischluftmassenstrom und dem Frischluftmassenstrom aus dem Speichervolumen |
| $m_{lad}$ | Frischluftmasse zwischen dem Verdichter und dem Saugrohr des Verbrennungsmotors |
| $m_{sr}$ | Masse des Frischluft/Abgasgemisches in dem Saugrohr |
| $V_{sr}$ | Saugrohrvolumen |
| $m_L$ | Frischluftmasse in dem Saugrohr |
| $m_{AGR}$ | Abgasmasse in dem Saugrohr |
| WF | Wandwärmefaktor des Saugrohrs |
| $P_{ndr}$ | Druck hinter einer Drosselstelle |
| $p_{vdr}$ | Druck vor einer Drosselstelle |

## Patentansprüche

1. Verfahren zur Bestimmung der Zusammensetzung des Gasgemisches in einem Brennraum eines Verbrennungsmotors mit Abgasrückführung,
   wobei Frischluft mit einem über die Abgasrückführung zurückgeführten Abgas des Verbrennungsmotors (1) an einer Mischstelle (10) gemischt und das daraus resultierende Gasgemisch dem Brennraum des Verbrennungsmotors (1) zugeführt wird,
   **dadurch gekennzeichnet,**
   **dass** die Zusammensetzung des Gasgemisches in dem Brennraum des Verbrennungsmotors (1) unter Ermittlung entsprechender Zustandsgrößen des Verbrennungsmotors (1) mittels Verwendung entsprechender physikalisch basierter Modelle (16-21), welche in Bezug auf die jeweils zu ermittelnde Zustandsgröße das Verhalten des Verbrennungsmotors (1) nachbilden, bestimmt wird.

2. Verfahren nach Anspruch 1,
   **dadurch gekennzeichnet,**
   **dass** mit Hilfe eines physikalisch basierten Modells (17) der über die Abgasrückführung zu der Mischstelle (10) fließende Abgasrückführmassenstrom ($Dm_{AGR}$) nachgebildet wird.

3. Verfahren nach Anspruch 2,
   **dadurch gekennzeichnet,**
   **dass** der Abgasrückführmassenstrom ($dm_{AGR}$) in Abhängigkeit von einer Durchflusskenngröße (DF), einer effektiven Querschnittsfläche ($A_{AGR}$) eines in der Abgasrückführung enthaltenen Abgasrückführventils (13), einer Gaskonstante (R) sowie einem Abgasgegendruck ($p_{AGR}$) und einer Temperatur des zurückgeführten Abgases ($T_{AGR}$) vor dem Abgasrückführventil (13) bestimmt wird.

4. Verfahren nach Anspruch 3,
   **dadurch gekennzeichnet,**
   **dass** der Verlauf der Temperatur des über die Abgasrückführung zurückgeführten Abgases mit Hilfe des Modells (17) nachgebildet und daraus die Temperatur ($T_{AGR}$) des zurückgeführten Abgases vor dem Abgasrückführventil (13) abgeleitet wird.

5. Verfahren nach Anspruch 3 oder 4,
   **dadurch gekennzeichnet,**
   **dass** der Abgasrückführmassenstrom $dm_{AGR}$ aus der effektiven Querschnittsfläche $A_{AGR}$ des Abgasrückführventils (13), dem Abgasgegendruck $p_{AGR}$, der Temperatur $T_{AGR}$, der Gaskonstante R und der Durchflusskenngröße DF wie folgt ermittelt wird:

$$dm_{AGR} = A_{AGR} \cdot p_{AGR} \cdot \frac{2}{\sqrt{R \cdot T_{AGR}}} \cdot DF$$

wobei für den Fall, dass der Abgasrückführmassenstrom von einem Ansaugtrakt des Verbrennungsmotors (1) in einen Abgastrakt des Verbrennungsmotors (1) strömt, als Wert für den Abgasgegendruck der Ladedruck der Frischluft in dem Ansaugtrakt und als Wert für die Temperatur die Ladetemperatur der Frischluft in dem Ansaugtrakt verwendet wird.

6. Verfahren nach einem der Ansprüche 3-5,
   **dadurch gekennzeichnet,**
   **dass** die effektive Querschnittsfläche ($A_{AGR}$) des Abgasrückführventils (13) in Abhängigkeit von einem Vergleich zwischen einem gemessenen Ladedruck ($p_{lad}$), mit welchem die Frischluft der Mischstelle (10) zugeführt wird, und einem mit Hilfe eines weiteren Modells (19) modellierten Ladedruck ($p_{ladmod}$) durch Verwendung eines entsprechenden Korrekturfaktors (AKORR) angepasst wird.

7. Verfahren nach einem Ansprüche 3-6,
   **dadurch gekennzeichnet,**
   **dass** die Durchflusskenngröße (DF) aus dem Druckverhältnis über dem Abgasrückführventil (13) abgeleitet wird.

8. Steuersystem für einen Verbrennungsmotor mit Abgasrückführung,
   wobei Frischluft mit einem über die Abgasrückführung zurückgeführten Abgas des Verbrennungsmotors (1) in einer Mischstelle (10) gemischt und das daraus resultierende Gasgemisch einem Brennraum des Verbrennungsmotors (1) zugeführt wird,
   **dadurch gekennzeichnet,**
   **dass** das Steuersystem derart ausgestaltet ist, dass es zur Steuerung des Verbrennungsmotors (1) automatisch die Zusammensetzung des Gasgemisches in dem Brennraum des Verbrennungsmotors (1) unter Berechnung entsprechender Zustandsgrößen des Verbrennungsmotors (1) mittels Verwendung entsprechender physikalisch basierter Modelle (16-21), welche in Bezug auf die jeweils zu berechnende Zustandsgröße das Verhalten des Verbrennungsmotors (1) nachbilden, bestimmt.

9. Steuersystem nach Anspruch 8,
   **dadurch gekennzeichnet,**
   **dass** das Steuersystem zur Durchführung des Verfahrens nach einem der Ansprüche 1-7 ausgestaltet ist.

FIG. 1

FIG. 2

**17**

$p_{AGR}$ →
$A_{AGR}$ →
$p_{sr}$ →
$T_{sr}$ →
DF →
$T_{AG}$ →
RF →
$T_k$ →
AKORR →

→ $dm_{AGR}$
→ $T_{AGR}$

# FIG. 3

**18**

$m_{kr}$ →
n →
FB →
$T_A$ →
$p_A$ →
$T_{lad}$ →
$p_{lad}$ →
$A_{eff}$ →
$dm_{AGR}$ →

→ s
→ $T_{AG}(T_{vT}), T_{nT}$
→ $dm_{ASA}, dm_T$
→ $p_{vv}, p_{nv}$
→ $n_{ATL}$
→ $dm_v$
→ $p_{nT}, p_{vT}$
→ $\Delta p_{AG}$
→ $p_{AGR}$

# FIG. 4

10

$dm_{HFM}$ → $V_L$ → $dm_L$ → $A_{dr}$ →

$dm_{AGR}$

## FIG. 5

19

$V_L$ →
$T_{lad}$ →
$DF$ →
$dm_{HFM}$ →

→ $dm_L$
→ $m_{Ls}$
→ $p_{ladmod}$
→ $\Delta dm_L$
→ $m_{lad}$

## FIG. 6

$dm_{HFM}$ → $m_{lad}$ $V_L$ $p_{ladmod}, T_{lad}$ → $dm_L$ → $m_{sr}$ $V_{sr}$ $p_{sr}, T_{sr}$ → $dm_{Lmot}$ →

$dm_{AGR}$

10

## FIG. 7

20

$dm_L$ →

$dm_{Lmot}$ →

$dm_{AGR}$ →

$dm_{AGRmot}$ →

$V_{sr}$ →

$T_{sr}$ →

→ $m_L$

→ $m_{AGR}$

→ $m_{sr}$

→ $p_{sr}$

→ $r_{AGR}$

## FIG. 8

21

$m_{AGR}$ →

$T_{AGR}$ →

$m_L$ →

$m_{lad}$ →

$n$ →

$dm_{Lmot}$ →

$T_K$ →

WF →

→ $T_{sr}$

## FIG. 9

DF

$p_{ndr}$ , $p_{vdr}$

## FIG. 10